# EUROPEAN PATENT SPECIFICATION

(11) **EP 0 358 405 B1**
(45) Date of publication and mention of the grant of the patent: **20.07.1994**
(21) Application number: 89308802.1
(22) Date of filing: 31.08.1989
(51) Int. Cl.: B30B 15/28

(54) **Apparatus and method of detecting abnormal load of pressurizing apparatus**
Einrichtung und Verfahren zur Feststellung einer in einem Druckgerät unüblichen Last
Appareil et procédé de détection d'une charge anormale dans une presse

(30) Priority: 08.09.1988 JP 224962/88; 23.12.1988 JP 325304/88; 07.03.1989 JP 54837/89
(43) Date of publication of application: 14.03.1990
(73) Proprietor: TRW STEERING SYSTEMS JAPAN CO., LTD., Kasugai-shi Aichi-ken 486 (JP)
(72) Inventor: Maeda, Naoyuki, Inuyama-shi (JP)
(74) Representative: Allden, Thomas Stanley

(56) References cited:
- DE-A- 2 013 272
- DE-A- 3 300 852
- GB-A- 2 127 973
- US-A- 3 825 811
- US-E- 30 298
- PATENT ABSTRACTS OF JAPAN, vol. 7, no. 153 (M-226)[1298], 5th July 1983; & JP-A-58 62 000 (RIKEN KEIKI) 13-04-1983
- PATENT ABSTRACTS OF JAPAN, vol. 6, no.93 (M-133)[971], 29th May 1982; & JP-A-57 28 700 (AIDA) 16-02-1982

## Description

This invention relates to an apparatus for, and a method of, detecting an abnormal load of a pressurizing apparatus.

The present invention concerns an abnormal load detection apparatus for a pressurizing apparatus of the kind comprising power generation means adapted for rotational motion and including a motor; converter means for converting the rotative kinetic energy into linear kinetic energy; pressurizing means for applying the linear kinetic energy to the work; means for detecting a change in the load imposed on the work and converting it into an electrical signal; means for sampling said electrical signal at a selected one of a plurality of pressurizing positions and a plurality of pressurizing time points; means for storing a normal value of the electrical signal corresponding to said sampling points; means for comparing a value obtained by said sampling with the normal value stored; and means for deciding on an abnormal load condition when the result of said comparison exceeds a predetermined value; wherein said means for detecting a load change and converting it into an electrical signal includes means for detecting the power consumption of said motor. Such an abnormal load detection apparatus is known from DE-A-2013272.

In accordance with one aspect of the present invention as claimed, an abnormal load detection apparatus of the aforementioned kind is characterised in that said means for detecting the power consumption and converting it into an electrical signal includes means for converting the power consumption detected into a voltage according to the magnitude of the power, means for converting the voltage into a frequency and means for counting the frequency, and, said sampling means includes means for sampling a count value of said counting means.

The present invention also concerns a method of abnormal load detection of the kind comprising the step of detecting a load change of the work and converting the detection into an electrical signal; the step of sampling the electrical signal converted at a selected one of a plurality of pressurizing positions and a plurality of points of pressurizing time; the step of comparing the sample value with a normal value of the electrical signal corresponding to the sampling point; and the step of deciding on an abnormal load condition when the result of the comparison exceeds a predetermined tolerance; wherein said step of detecting a load change and converting it into an electrical signal includes the step of detecting the power consumption of a motor. Such a method of abnormal load detection is also known from DE-A-2013272.

In accordance with another aspect of the invention as claimed, a method of abnormal load detection of the aforementioned kind is characterised in that said step of converting a load change into an electrical signal includes the steps of converting the electrical signal into a frequency and counting the frequency; and said step of sampling includes the step of sampling the count value of said counting means.

In accordance with yet another aspect of the invention as claimed, an abnormal load detection apparatus for a pressurizing apparatus comprises power generation means adapted for rotational motion; conversion means for converting the rotational kinetic energy into linear kinetic energy; pressurizing means adapted for linear motion by the linear kinetic energy; means for detecting the displacement due to a mechanical strain between said pressurizing means and said power generation means as a signal representing a load condition under pressurization; and means for detecting an abnormal load condition from a change in the detected strain displacement.

In accordance with a further aspect of the invention as claimed, there is provided a method of abnormal load detection for a pressurizing apparatus comprising power generation means adapted for rotational motion, means for converting the rotational kinetic energy into linear kinetic energy and pressurizing means adapted for linear motion by the linear kinetic energy; the method comprising the steps of detecting a displacement due to the mechanical strain between said power generation means and said pressurizing means as a signal representing a load condition and detecting an abnormal load condition from a change in the detected strain displacement.

More particularly, the present invention relates to a pressurizing apparatus comprising a power source including a motor and a flywheel and a slide ram adapted for linear motion through a flywheel crankshaft to pressurize a material, and still more particularly to an apparatus and a method of immediately detecting an abnormal condition and promptly finding a fault such as the breakage, cracking or wear or displacement by work grip failure of a punch or die of a pressure unit which may develop during the pressurizing work by the former.

References to abnormal load detection apparatuses relating to the present invention include JP-B-59-22902 (U) filed on November 17, 1981 and JP-B-57-1341 filed on January 14, 1980 by Sakamura Kikai Seisakusho Ltd., a technical report entitled "Energy Sensor Developed for Extra Large Size Former" for introducing new products of Sakamura Kikai Seisakusho Ltd., and product specifications "Processa 3040-A", "Processa Model 4040" and "Processa Model 4010 Compact" of Brankamp system Peozebautomation GmbH.

The abnormal load detection apparatuses disclosed in these references are operated in such a manner that a load cell embedded in the rear part of a punch or a die records a maximum or average value of load change for each pressurizing stroke or a sync signal is used to record an average value of load change within a predetermined specific partial area in a stroke, and the resulting value thus obtained is compared with a normal value for pressurizing the work within a tolerance thereby to detect an abnoramal condition or fault.

In these conventional apparatuses, a normal value is not compared with each of load changes sampled continuously in the process of work deformation at or in the vicinity of a pressurizing point of a moving pressure unit, and therefore it is impossible to detect with high accuracy an abnormal load which may occur instantaneously at a given time point while the work is under pressure.

Another disadvantage of these conventional apparatuses is that in view of the fact that the full load is imposed on a load cell providing a sensor, it is practically impossible to use a small-capacity high-sensitivity load call capable of detecting a very small change under an abnormal load and that the use of a single data of average or maximum load for each stroke of the pressurizing work to detect a fault fails to attain an abnormal load detection with high resolution.

In accordance with preferred embodiments of the present invention, an abnormal load detection apparatus is provided in which a load change in the process of work deformation is determined by detecting the power consumption of a motor making up a power source, a mechanical strain of the former or a shock force of the pressurizing process by a sensor, and a signal thus obtained is converted into an electrical signal. The power consumption is detected by detecting the effective power or the power factor indicating the ratio of effective factor in the power consumption. The electrical signal thus detected is continuously sampled and stored. The stored value is compared with a normal value sampled previously. If the difference between the two values thus compared exceeds a tolerance, the pressurizing work is stopped. In detecting a load change from the power consumption of a motor, the power consumption is converted from analog to digital signals or from analog signal to frequency, and pulses thus generated are counted by a counter. This count is based on the data representing the amount of shift of a slide ram in actual pressurizing work. The data representing the shift of the slide ram is obtained as a pulse from an oscillator which derives a starting pulse from a trigger pulse generated at a predetermined position of the slide ram or a flywheel. Such a pulse may alternatively be obtained from a linear pulse encoder mounted on a slide ram or a rotary pulse encoder mounted on a crankshaft for converting the rotational energy of a motor into the linear motion of the slide ram. This pulse is used as a reference pulse for determining the timing of sampling. The V-F (voltage-frequency) of A/D conversion, counting of pulses, comparison and generation of a signal upon detection of a fault, are all effected by a controller including a CPU, a RAM, a ROM, an I/O interface, or other processing devices having the required functions.

A load change is detected from the mechanical strain of the former by sampling an output of a strain gauge mounted on the former body.

In the method of detecting a load change from a mechanical strain, a pulse encoder is mounted both on a flywheel crankshaft of a power source in rotary motion and on a slide ram for converting the rotational kinetic energy into a linear kinetic energy which is used for actual pressurizing work. A pulse signal from a rotary pulse encoder mounted on the flywheel crankshaft for detecting an angular displacement of the crankshaft and a pulse signal from a linear pulse encoder for detecting the displacement of the linear motion of the slide ram are counted, processed, compared and subjected to such process as normal-abnormal decision, so that the difference in the number of pulses produced under an abnormal load is used to detect a case of fault or abnormal condition, thus producing a fault signal for suspending the pressurizing work. The controller has built therein a CPU, a RAM as data memory, a ROM as program storage memory, a counter, and other processing devices having the required functions.

A load change is detected from an impact force by sampling an output from a load cell embedded in the punch or die side.

In one preferred apparatus and a method, a detected load change is sampled at a plurality of points for detecting an abnormal load, and therefore a very small abnoraml load condition including the breakage, cracking or wear of a die or displacement due to work grip failure which may develop during the pressurizing work and have an adverse effect on the work processing is easily and accurately detected.

According to a method of the present invention utilizing a mechanical strain, the displacement due to mechanical strain which may develop between the flywheel crankshaft and the slide ram of the machine during the pressurizing work is used as a signal representing a load condition, and the displacement due to strain is detected as a phase difference between pulses generated by two pulse encoders or more accurately as a difference in the number of pulses generated therebetween. It is thus possible to detect even a slight change in load signal with high sensitivity as a large amount of displacement, thereby assuring detection of high resolution of an abnormal load.

Attention is also drawn as an example of the prior art to GB-A-2127973
In order that the invention may be well understood various preferred embodiments of the invention, given by way of example will now be described with reference to the accompanying drawings, in which :
Fig. 1 is a diagram showing an embodiment of the invention utilizing the effective power;
Fig. 2 is a diagram for explaining the operation of the embodiment shown in Fig. 1;
Fig. 3 and Fig. 4 are flowcharts of programs for executing the operation of the embodiment shown in Fig. 2;
Fig. 5 is a diagram showing another embodiment of the present invention utilizing the effective power;
Fig. 6 is a diagram for explaining the operation of the embodiment shown in Fig. 5;
Fig. 7 is a diagram showing still another embodiment of the invention utilizing the effective power;
Fig. 8 is a diagram showing still another embodiment of the invention utilizing the mechanical strain;
Fig. 9 is a sensor output diagram according to an embodiment of the present invention;
Fig. 10 is a diagram showing specific steps of the pressurizing work;
Fig. 11 is a diagram showing an output of a sensor produced at each processing step shown in Fig. 10;
Fig. 12 is a diagram showing still another embodiment of the invention utilizing the mechanical strain;
Fig. 13 is a diagram for explaining the operation of the embodiment shown in Fig. 12;
Fig. 14 and Fig. 15 are flowcharts based on the operation explained in Fig. 13;

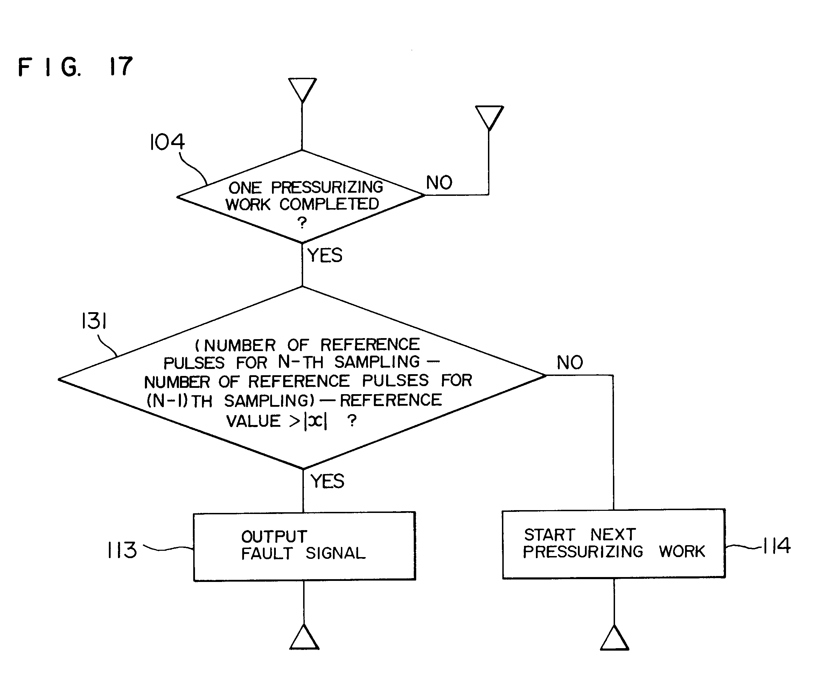

Fig. 16 and Fig. 17 are flowcharts showing another embodiment of means for abnormal load decision;
Fig. 18 is a diagram for explaining the operation of still another embodiment having the configuration shown in Fig. 12;
Fig. 19 and Fig. 20 are flowcharts based on the operation explained in Fig. 18; and
Fig. 21 and Fig. 22 are flowcharts showing another embodiment for abnormal load decision.

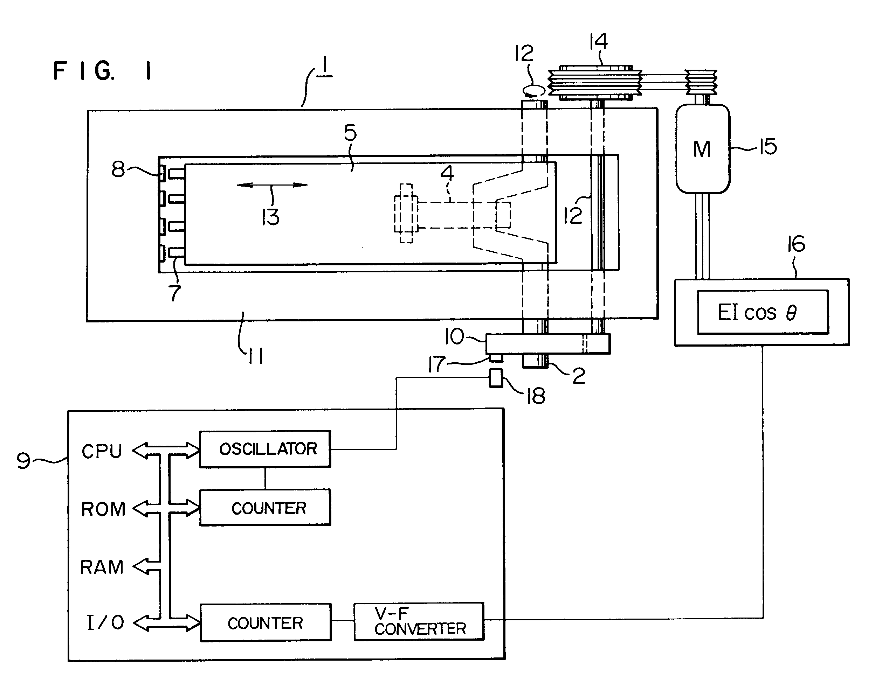

Referring first to Fig. 1, an example of the present invention is shown in which a load change is detected from the power consumption of a motor and a reference pulse is obtained from an oscillator in a controller 9. Numeral 1 designates a former body. The rotational energy of a motor 15 is transmitted through a pulley 14 and a shaft 12 to a flywheel 10 and stored therein. A flywheel crankshaft 2 is connected to a slide ram 5 by a connecting rod 4, so that the turning effort 12 of the flywheel crankshaft 2 is converted into a linear motion 13 of the slide ram 5. A punch 7 is mounted at the forward end of the slide ram 5, a die 8 is arranged on a frame 11 of a former 1 at a position in opposed relations with the punch 7. A proximity switch element 17 for generating a trigger pulse providing a start pulse for the oscillator in the controller 9 and a sensor 18 therefor are mounted on the flywheel 10. The motor 15 is connected with a power consumption detection means 16 for detecting the effective power EI cosϑ of the power consumption.

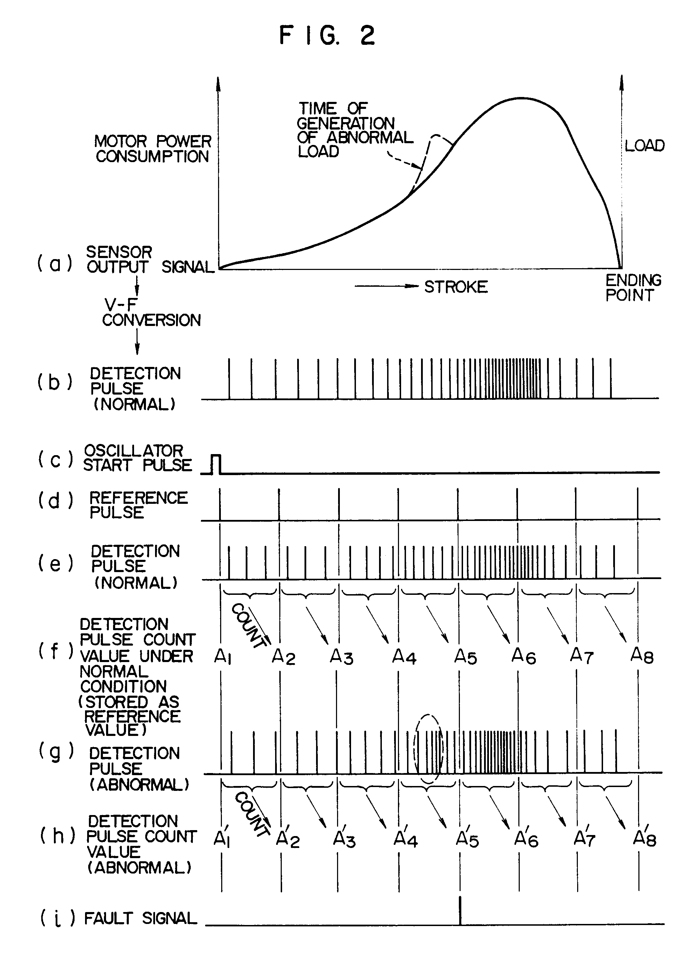

Fig. 2 shows the operation within the controller 9. This operation is entirely controlled by a program under the control of a CPU. A power consumption waveform for the pressurizing work assumes a smooth form as shown in Fig. 2(a) as an actual load change is somewhat integrated by the energy storage-discharge function of the flywheel 10. The power consumption waveform (a) is detected as a load change waveform by a power consumption detection means 16. The output thus produced is subjected to a V-F conversion, thereby producing a detection pulse output higher in frequency for a high power consumption as shown in (b). When the flywheel 10 rotates with the proximity switch element 17 passing through the sensor 18, the oscillator pulse of (c) is generated. This start pulse couses the oscillator within the controller 9 to be energized thereby to generate a pulse shown in (d) at regular intervals of time. This pulse provides a reference used as a sampling pulse for counting detection pulses. A reference pulse may alternatively be generated at predetermined intervals of time by counting the time in accordance with a program instead of by using an oscillator. The count value of detection pulses is sampled and stored each time of generation of a reference pulse. The detection pulse count value may be reset each time of generation of a reference pulse or an integrated value. An example of resetting a counter each time a reference pulse is generated is shown in (e). The number of samplings is determined appropriately in advance by a program taking into consideration the time at which the change area of power consumption charged in the flywheel is capable of being caught, or a detection point.

A reference value is obtained by conducting the normal pressurizing work several times and averaging the count value of the detection pulses sampled for each reference pulse. The several pressurizing work for determining a reference value may be either initial several ones or given several ones of all the work that have already been conducted. As another alternative, an appropriate value may be written as a part of the program. A reference value is stored as A1, A2 and so on of (f). In actual pressurizing process, each time a reference pulse is generated, the count value of detection pulses sampled is compared with a reference value. If an abnormal load condition occurs as shown by dashed line in the waveform (a), the number of pulses at or around the time point of abnormal load occurrence increases as shown in (g). At this time, the detection pulse count value A′5 shown in (h) is compared with a reference value A5, and if the difference therebetween exceeds a tolerance (X), a fault signal (i) is generated thereby to stop the pressurizing work.

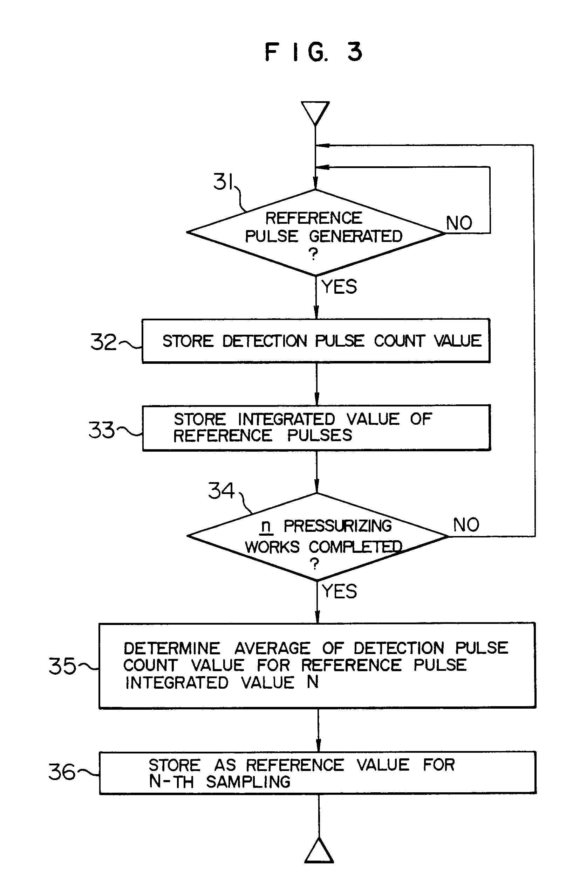

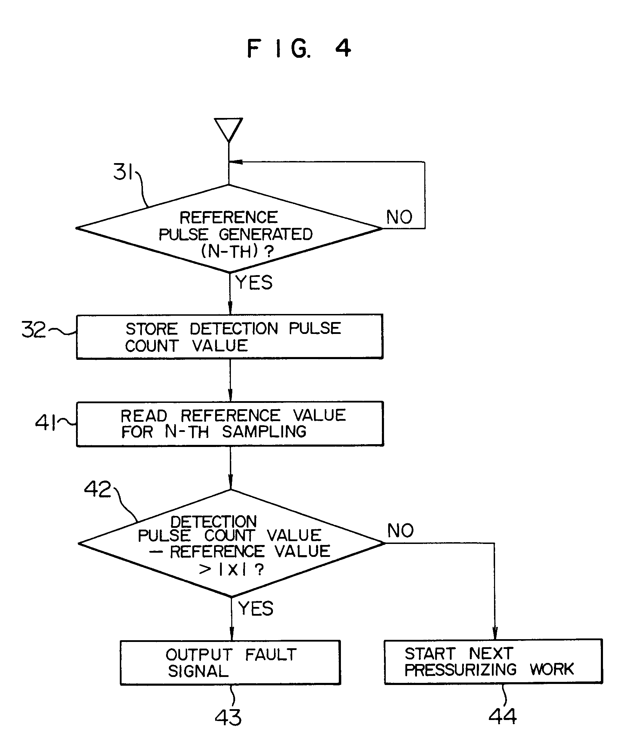

Program flowcharts are shown in Figs. 3 and 4. The flowchart of Fig. 3 is for determining a reference value. Step 31 monitors the generation of a reference pulse, and upon generation of a reference pulse, step 32 stores the count value of detection pulses. Then, the integrated value of reference pulses is stored at step 33. Instead of storing an integrated value of reference pulses, the sampling number may be identified by the address of a memory for storing the count value of detection pulses each time of sampling thereof. Sampling is not necessarily effected each time of generation of a reference pulse but by a selected reference pulse. In order to determine an average value for a number n of normal pressurizing work repeated, step 34 monitors whether a number n of pressurizing work has been completed. At the end of a number n of pressurizing work, step 35 determines an average value of counts of the detection pulses for the same integrated value N of reference pulses associated with the number n of normal operations, and step 36 samples the average value and stores it as a reference value for the N-th detection pulse count.

A flowchart of a program for decision on abnormal load is shown in Fig. 4. Steps 31 and 32 sample a detection pulse count value from the N-th reference pulse. Step 41 reads the reference value for the N-th sampling from the memory, and step 42 determines the difference between the sampled value and the reference value, while at the same time checking to see whether the result of comparison exceeds the tolerance X assuring that the work piece is capable of being processed within the tolerance. If the difference exceeds the tolerance X, step 43 decides that a fault has occurred and produces a fault signal. If the difference does not exceed the tolerance X, step 44 starts the next pressurizing work.

In this embodiment, proximity switches 17 and 18 may be mounted on the slide ram 5 and the frame 11 respectively.

### (Embodiment 2)

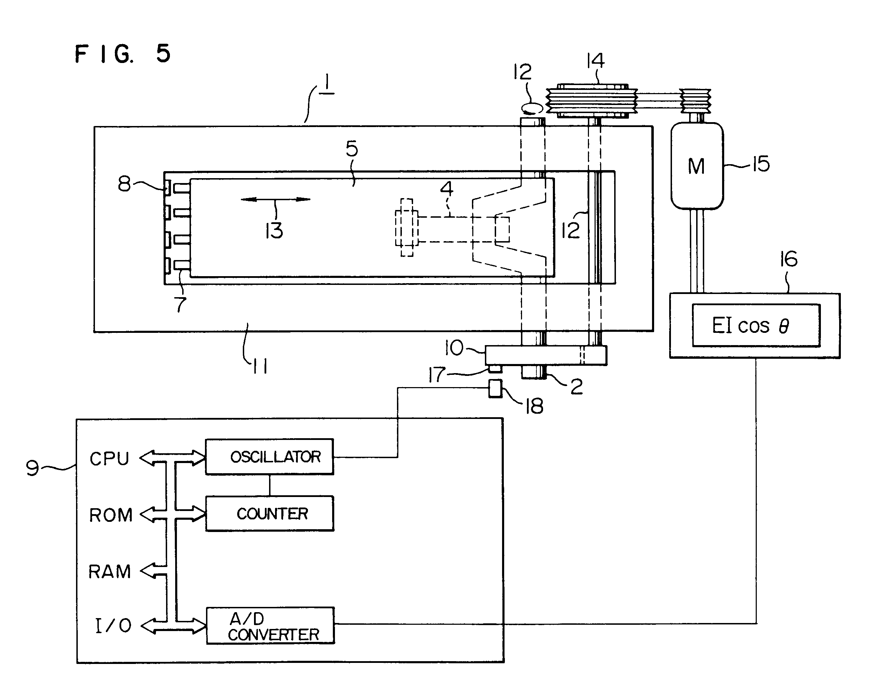

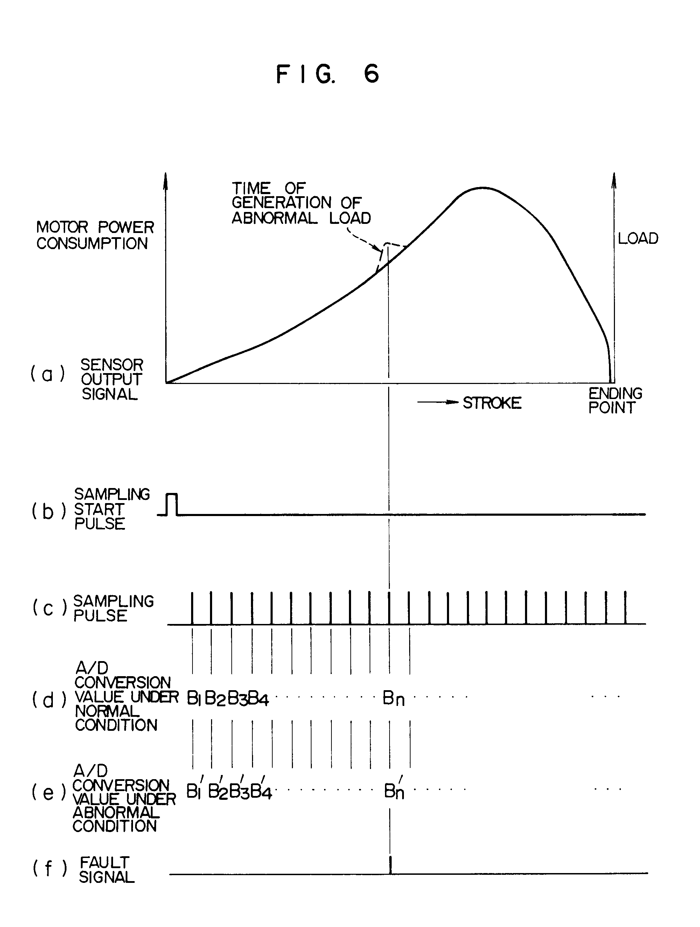

Power consumption may be detected as an analog value and subjected to analog-to-digital instead of voltage-to-frequency conversion and may be stored in digital form. A circuit configuration for such a method is shown in Fig. 5, and the operation thereof in Fig. 6. A start pulse shown in (b) is generated by proximity sensors 17, 18 or a program, and with this time point as a reference, an output signal of a power consumption detection sensor representing a load change is sampled. The sampling value is subjected to A/D conversion and stored in memory. Reference values are stored as B1, B2, so on as shown in (d). The reference value is determined in the same manner as in Embodiment 1. Each time of pressurizing work, the sampled analog signal is subjected to A/D conversion, and is stored as B1', B2', so on as shown in (e). If an abnormal load occurs as shown by the dashed line in Fig. 6, the A/D conversion value Bn′ undergoes a considerable change, and if the difference thereof with the reference value Bn exceeds a tolerance X, a fault signal shown in (f) is generated thereby to stop the pressurizing operation.

A flowchart for the aforementioned operation is obtained by replacing the count value of detection pulses with an A/D conversion value in Figs. 3 and 4.

In the process of comparison, each A/D conversion value may be compared with each corresponding reference value, or the sum of a predetermined continuous number of A/D conversion values may be compared with a corresponding normal value. As another alternative, an integrated value of A/D conversion values may be compared with a corresponding normal value for each predetermined number of samplings.

The above-mentioned methods of comparison of A/D conversion value are applicable also to all other embodiments.

The proximity switches 17, 18 may be mounted on the slide ram side.

### (Embodiment 3)

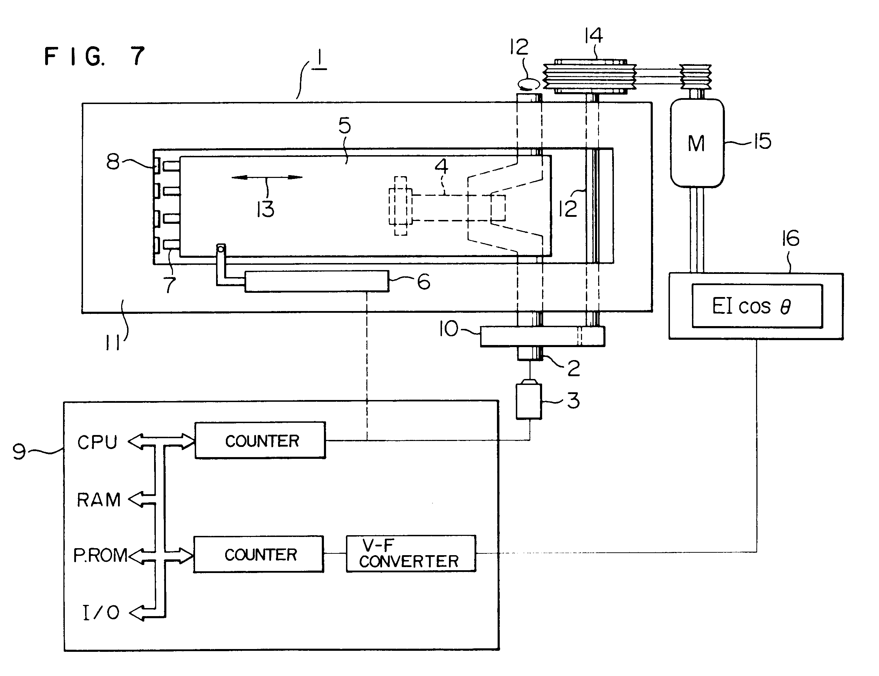

Fig. 7 shows another embodiment in which a load change is detected from the power consumption of a motor and a reference pulse is produced from a rotary pulse encoder 3 mounted on a flywheel crankshaft 2. If a rotary pulse encoder having a start pulse built therein is used in this embodiment, the oscillator in the controller and the proximity switch for generating the start pulse of the oscillator are eliminated. The operation of this embodiment is identical to that of Fig. 2 lacking the oscillator start pulse (c). The flowchart of the program of this embodiment is the same as Figs. 3 and 4.

The same object of operation is also achieved by a linear pulse encoder 6 having a start pulse built therein mounted on the slide ram side instead of a rotary pulse encoder.

### (Embodiment 4)

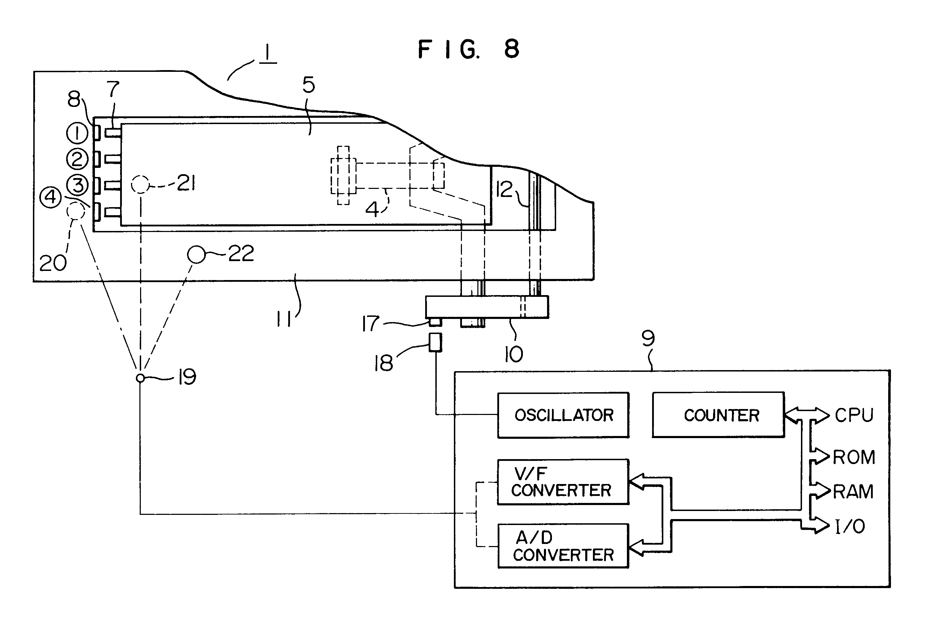

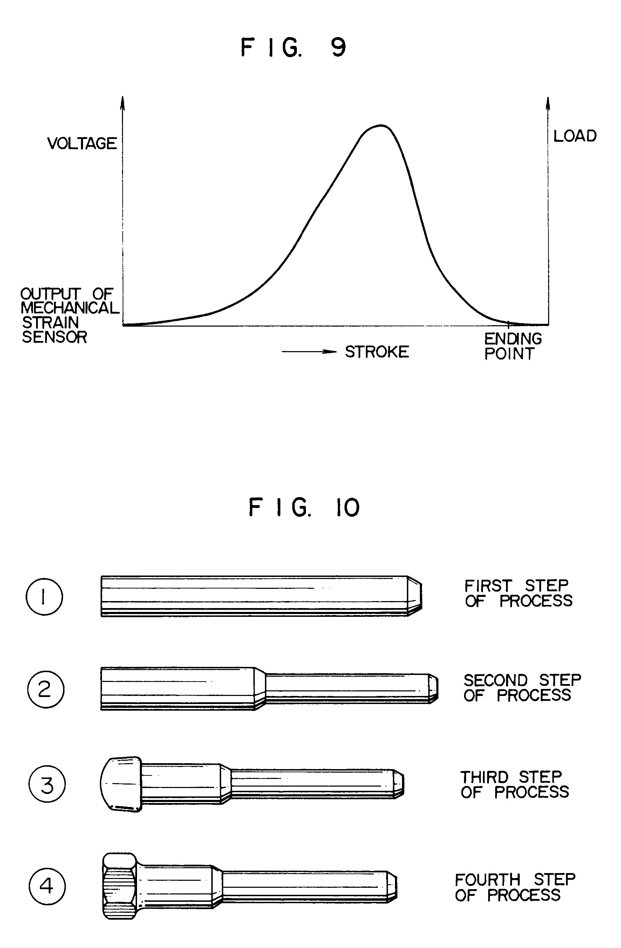

An embodiment in which a load change is detected from mechanical strain by a sensor which converts the load change into an electrical signal is shown in Fig. 8. A load cell or a piezoelectric device is generally known as a device for converting a mechanical strain into an electrical signal. Numeral 20 designates a load cell embedded in a die 8, and numeral 21 designates a load cell embedded in a punch 7. Numeral 22 designates a piezoelectric device mounted on a frame 11. A signal produced from one of the sensors 20 to 22 is applied to a controller 9 and subjected to V-F conversion, or a signal subjected to A/D conversion is sampled and stored. A corresponding output of a machine strain sensor representing the particular load change is shown in Fig. 9. The waveform of Fig. 9 has a high-frequency noise eliminated by filter. The related operation is identical to those of embodiments 1 or 2.

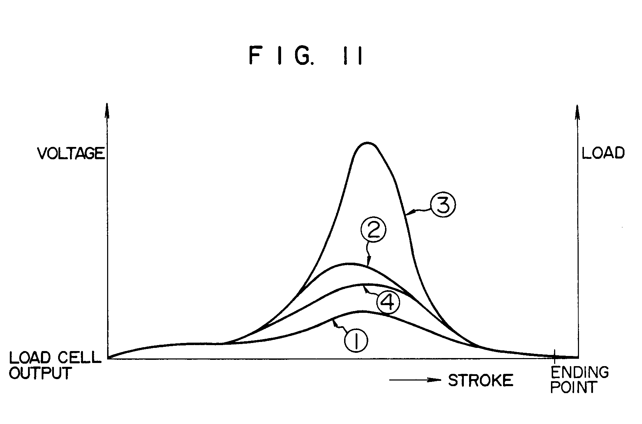

Specifically, assume that the four steps of process shown in Fig. 10 are accomplished simultaneously in parallel way by each of the dies ① to ④ shown in Fig. 8. If a load cell is embedded in the punch 7 or each of the dies 8, outputs of the load cells are detected in the waveforms ① to ④ corresponding to the respective steps ① to ④ as shown in Fig. 11. A plurality of these detection signals are processed in parallel by the operation of Embodiment 1 or 2 thereby to assure detection of an abnormal load with higher accuracy.

According to this embodiment also, the proximity switches 17 and 18 may be mounted on the slide ram side.

### (Embodiment 5)

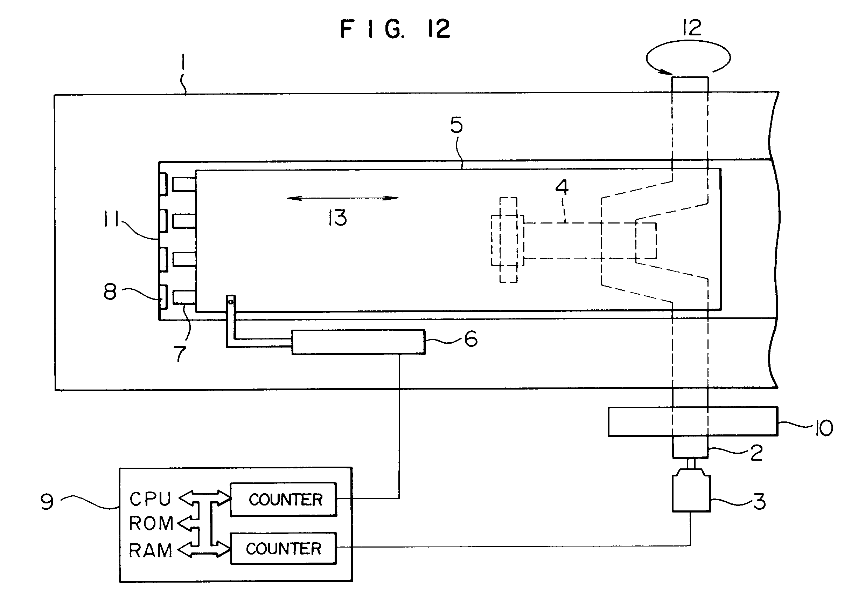

Another embodiment in which a load change is detected from mechanical strain is shown in Fig. 12.

A rotary pulse encoder 3 is mounted on a flywheel crankshaft 2 of a former 1. A pulse produced from this encoder 3 is used as a reference pulse.

A linear pulse encoder 6 is mounted on a slide ram 5. A pulse produced from this encoder 6 is used as a detection pulse.

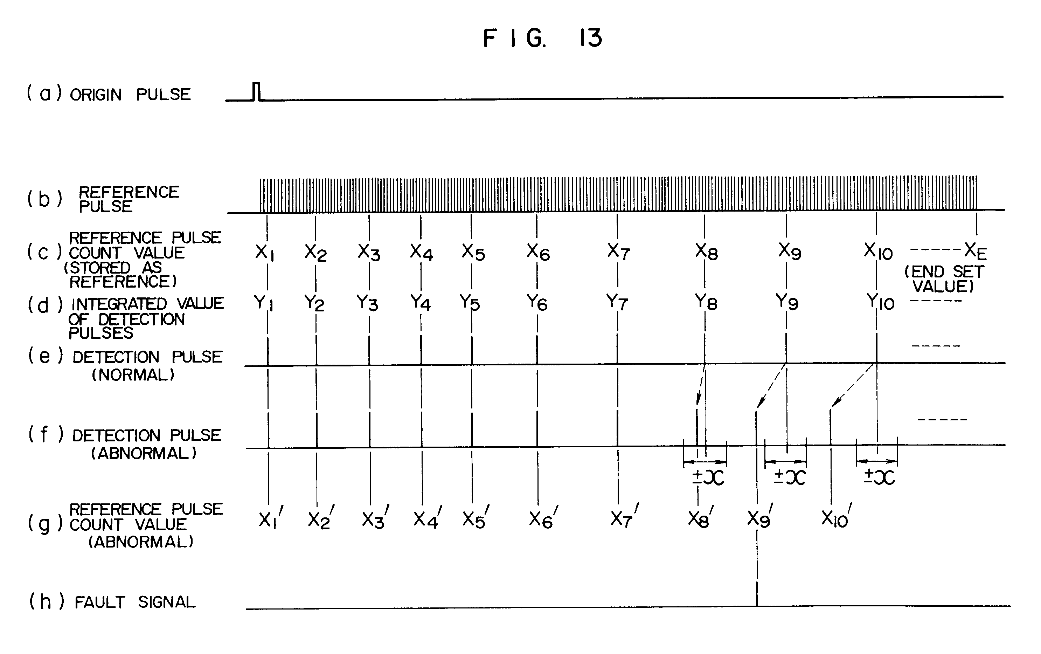

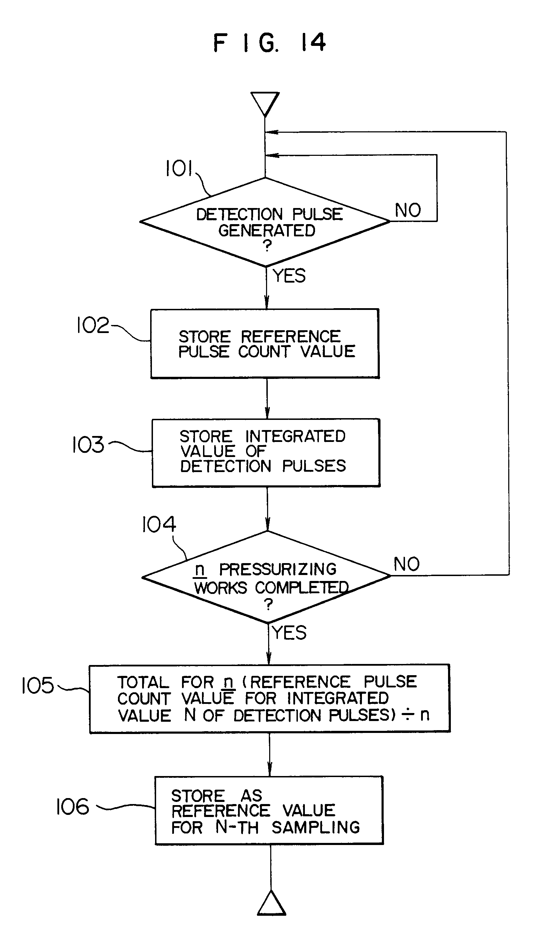

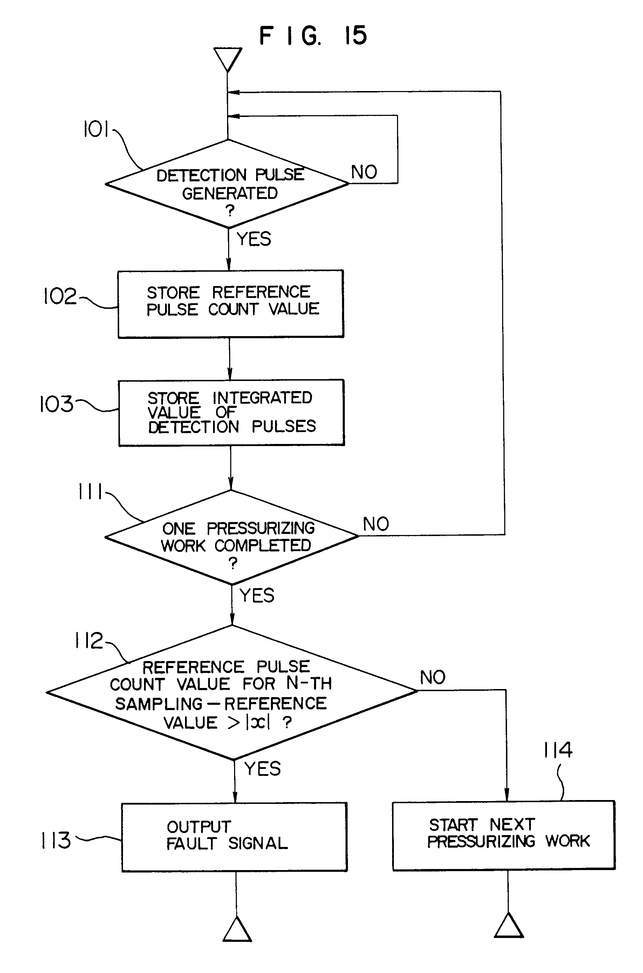

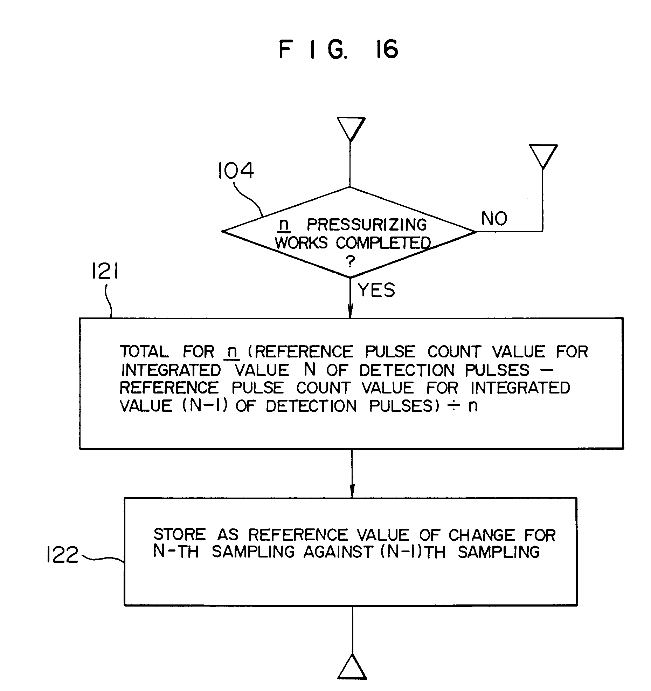

The resolution of the pulse encoder is set in such a manner that a plurality of pulses from the rotary pulse encoder 3 are available between adjacent pulses of the linear pulse encoder during the operation of the slide ram 5. (That is to say, the more the pulses, the higher the resolution) Upon application of pressure on the work from the slide ram 5, a displacement strain is generated in the machine, and therefore the motion of the slide ram 5 is substantially delayed, thereby lengthening the period of generation of a detection pulse as compared with a reference pulse. The period of the detection pulse faithfully reflects the speed change of the slide ram 5. The period of generation of the reference pulse, however, is not much affected in view of the fact that the change in rotational speed of the flywheel crankshaft 2 remains small due to the accumulated energy for rotations stored in the flywheel 10. Fig. 13 shows the operation of a fault detection according to the present embodiment. Upon starting the pressurizing work, an origin detector built in the rotary pulse encoder 3 generates an origin pulse (a), and counters in the controller 9 are energized to start counting the reference pulses (b) from the rotary pulse encoder 3 and the detection pulses (e) or (f) from the linear pulse encoder 6. In synchronism with the generation of a detection pulse, the controller 9 samples the count value of the reference pulses, and the value thus obtained is stored in memory. The count value of detection pulses indicates the number of samplings of reference pulses directly or indirectly. If the count value of detection pulses is not stored, means may be provided for identifying the sampling number by the address of a memory for storing the count value of reference pulses each time of sampling. Sampling may not be effected each time of generation of a detection pulse but for selected detection pulses. After initial several pressurizing work in normal operation, an average count value of reference pulses (X1, X2, so on) for each count value (Y1, Y2, so on) of detection pulses is determined and stored in a memory as a standard value (c) under normal operation. The count value of reference pulses may be either an integrated value from operation start to completion, or a count value in each sampling period reset each time and fetched separately. A flowchart for determining an average value is shown in Fig. 14. Step 101 sees the generation of a detection pulse, and steps 102 and 103 sample a count value of reference pulses from the counters and an integrated value of detection pulses associated therewith and store them in a memory. On the assumption that an average value for a number n of times of normal pressurizing work is determined, step 104 recognizes the end of a number n of pressurizing work cycles. Step 105 determines an average value by dividing by n the total for a number n of counts (a reference pulse count value for the same integrated value N of detection pulses) for a number n of cycles. Step 106 stores the average value as a reference value in memory. Reference pulses against detection pulses are naturally varied even in normal operation, and such variations are processed as a tolerance (±X) at the time of normal-abnormal decision mentioned below. If a fault such as die breakage, cracking or wear or work grip failure occurs in actual pressurizing process, the load decreases suddenly, and therefore the feed rate of the slide ram 5 is instantaneously increased at the time of the fault as compared with in normal operation. As a result, a detection pulse is generated earlier as shown by dashed arrow in Fig. 13(f). This causes some count values (X1', X2', so on) of reference pulses at the time of generation of detection pulses (X9') are deviated from the range of tolerance for normal operation. This relationship of generation of detection pulses and reference pulses at the time of a fault (f) and (g) is stored in memory in advance. This data is compared with a reference value (c) for normal operation and, if the result exceeds a tolerance (±X) set in advance, a fault signal (h) indicating the generation of a fault is produced. The end of pressurizing work is recognized in software by setting the number of reference pulses to a predetermined value. Upon generation of a fault signal (h), the air clutch in the flywheel 10 is separated, and the pressurizing work stops instantaneously, thus preventing the pressurizing work from being repeated under abnormal condition. The number n of pressurizing operations for determining an average value as a reference value is performed by alternating between two methods selectively. In one method, an average is taken for the first number n of pressuring work out of a plurality of pressuring operations continuously repeated and the value thus obtained is not updated until a predetermined number of pressuring operations is finished. In the other method, an average for a given number n of pressuring operations performed already is determined, and with the repetition of pressuring operations, a new number n of pressuring operations is selected to update the average value constantly. A flowchart for the present embodiment is shown in Fig. 15. Step 101 checks to see whether a detection pulse is generated or not. If a generation of a detection pulse is recognized, steps 102 and 103 sample two pulse count values, which are then stored in memory. This process of operation is repeated unitl a cycle of pressurizing work is completed. Upon detection of the end of a cycle of pressurizing work at step 111, step 112 subtracts a reference pulse count value for the N-th sampling stored as a reference value from a reference pulse count value for the N-th sampling (N: Integer), and if the result of subtraction exceeds the tolerance X, step 113 produces a fault signal, while if the tolerance X is not exceeded, step 114 produces a signal for starting the next cycle of pressurizing work. The number N of samplings coincides with the integration value of detection pulses, and therefore a reference pulse for the N-th sampling is easily searched for within a memory. If an integration value of detection pulses is not used, the number N indicating the sampling number may be determined by a memory address. In such a case, step 103 is omitted. Unlike the present embodiment in which count values of reference pulses associated with the generation of detection pulses are compared with each other, the increase or decrease in reference pulses may be determined by comparison between detection pulses as another embodiment. A flowchart for determining an average value in such a case is obtained by changing steps 105 and 106 in Fig. 14 to have the contents of steps 121 and 122 in Fig. 16 respectively. A flowchart for comparison according to the present embodiment is for seeing whether a tolerance X is exceeded by the difference between a reference value and a reference pulse count value for the N-th sampling less a reference pulse count value for the (N-1)th sampling. As a further embodiment, the count value of detection pulses may not be limited to an integration value but the sum of a detection pulse count value and a reference pulse count value may be used for comparison or the difference between the two pulse count values may be compared. A flowchart for such a purpose is realized by changing the steps 105 in Fig. 14 and step 112 in Fig. 15 to determine the sum or difference between a detection pulse count value and a corresponding reference pulse count value.

### (Embodiment 6)

This embodiment is so configured that more pulses are generated per unit time from a linear pulse encoder than from a rotary pulse encoder. No operational problem is posed, however, if substantially the same number of pulses are produced from both pulse encoders. This configuration is identical to that shown in Fig. 12.

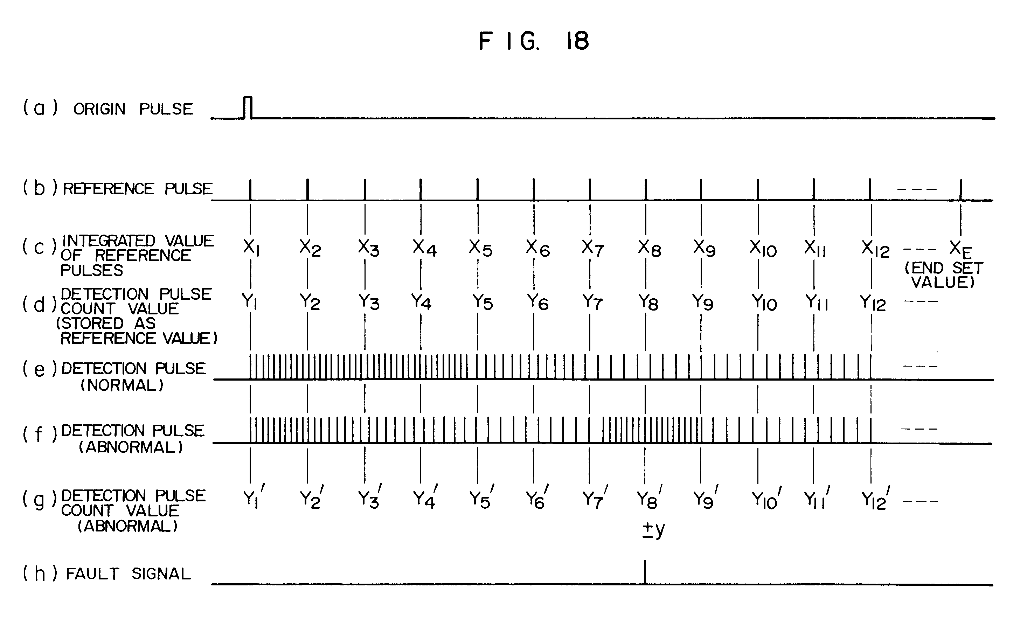

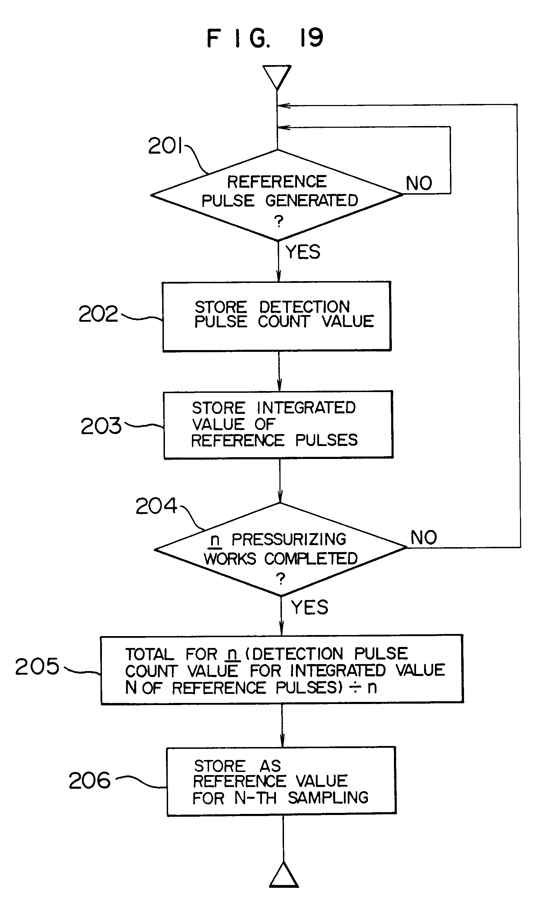

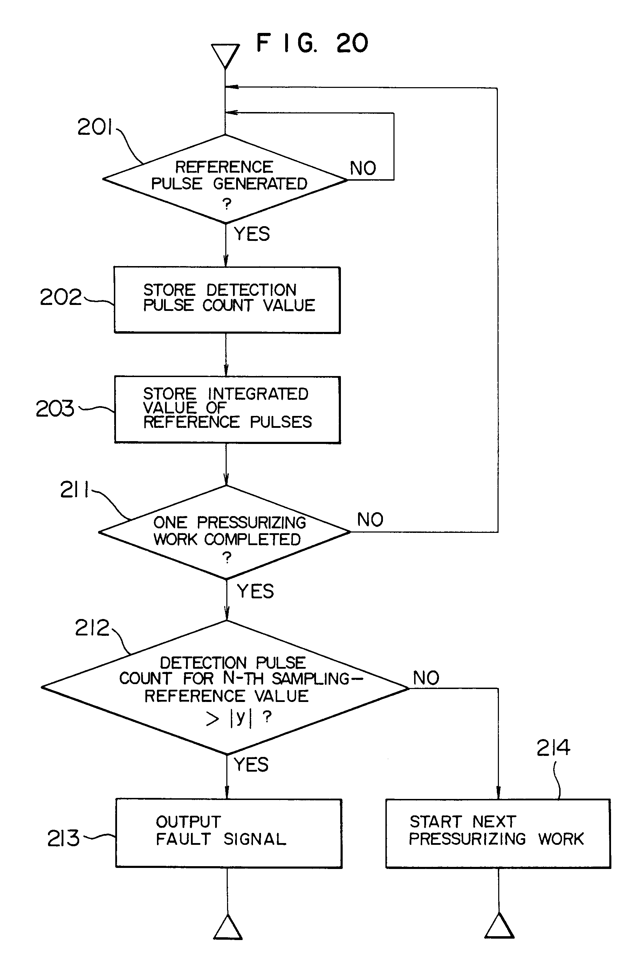

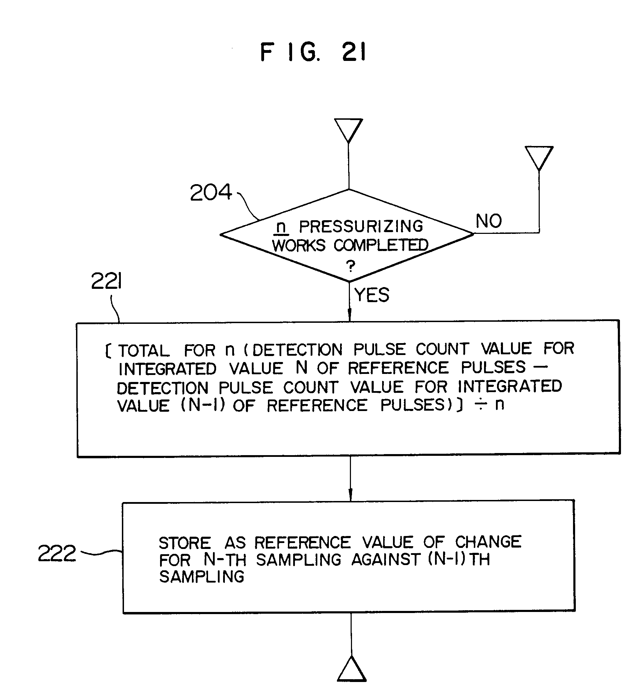

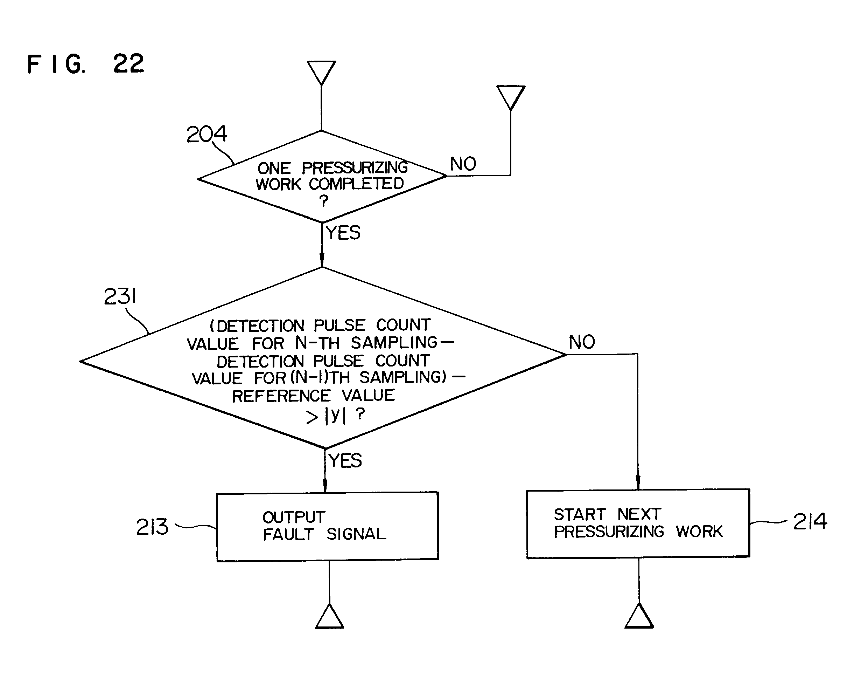

Fig. 18 is a diagram for explaining the operation of fault detection according to the present embodiment. With the start of pressurizing work, an origin pulse (a) is generated from an origin detector built in a rotary pulse encoder 3, and counters in a controller 9 begin to count reference pulses (b) from a rotary pulse encoder 3 and detection pulses (e) or (f) from a linear pulse encoder 6. The controller 9 samples a count value of detection pulses in synchronism with the generation of reference pulses, and values thus obtained are stored sequentially in memory. The count value of reference pulses indicates the number of samplings of detection pulses directly or indirectly. If count values of reference pulses are not stored, the sampling number may be identified from the memory addresses stored each time of sampling of a count value of detection pulses. Sampling need not be effected for each reference pulse but for selected reference pulses. Initially, an average count value (Y1, Y2, so on) of detection pulses for each count value (X1, X2, so on) of reference pulses is determined through several normal pressurizing operations, and is stored as a reference value (d) for normal operation in memory. The count value of detection pulses may be either an integration value from operation start to completion or a count value for each sampling section which is reset and fetched each time. A flowchart for determining an average count value is shown in Fig. 19. Step 201 checks to see whether a reference pulse is generated, and upon recognition of the generation of a reference pulse, steps 202 and 203 sample a count value of reference pulses and that of detection pulses and store them in memory. Assume that an average value is obtained by repeating normal pressurizing work a number n of times. Upon recongition of the end of a number n of pressurizing cycles at step 204, step 205 divides the total of a number n of count values (a count value of detection pulses for the same reference pulse integration value N) for a number n of cycles by n thereby to determine an average value. Step 206 stores this average value in memory as a reference value. Detection pulses generated against reference pulses, which are naturally subjected to variations even within a normal operation, are appropriately processed as a tolerance (±y) at the time of abnormal-normal decision mentioned below. If such a fault as die breakage, cracking or wear or work grip failure occurs in actual pressurizing process, the load is decreased suddenly, and therefore the feed rate of the slide ram 5 is instantaneously increased at the time point of the fault as compared with at the time of normal operation, resulting in detection pulses being generated earlier as shown in (f). As a result, some count values (such as Y8') out of the count values (Y1', Y2', so on) of detection pulses at the time of generation of reference pulses are deviated from the range of tolerance for normal operation. The relationship of generation between detection pulses and reference pulses as designated in (c) and (f) in abnormal operation is compared with the reference value (d) for the normal operation stored in memory, and if the result of comparison exceeds a tolerance (±y) set in advance, a fault signal (h) indicating a fault is generated. The end of pressurizing work is recognizable in software by setting the number of reference pulses to a predetermined level beforehand. Upon generation of a fault signal (h), an air clutch in a flywheel 10 is separated, and the pressurizing work is instantaneously stopped in such a manner as to inhibit the pressurizing work being repeated under abnormal conditions. A flowchart for the present embodiment is shown in Fig. 20. Step 201 checks to see whether a reference pulse is generated. Upon recognition of a reference pulse generated, steps 202 and 203 sample two pulse count values and store them in memory. This process of operation is repeated until the end of a cycle of pressurizing work is complete. Upon detection of the end of a cycle of pressurizing work at step 211, step 212 subtracts a detection pulse count value for the N-th sampling stored as a reference value from a count value of detection pulses for the N-th sampling (N: Integer), and if the result exceeds a tolerance y, step 213 produces a fault signal. Otherwise, step 214 produces a signal for starting the next pressurizing work cycle. The number N of samplings coincides with an integration value of reference pulses, and therefore detection pulses for the N-th sampling are easily searched for in the memory. In the case where any integration value of reference pulses is not used, the value N may be determined also from the memory address. In such a case, step 203 may be omitted. Unlike in the present embodiment where count values of detection pulses against generation of reference pulses are compared with each other, the change in the number of detection pulses between reference pulses may be determined as another embodiment. A flowchart for determining an average value in such an embodiment is obtained by including steps 205 and 206 in Fig. 19 changed to have the same contents as steps 221 and 222 in Fig. 21. In a flowchart for comparison process according to this embodiment, step 212 in Fig. 20, as shown by step 231 of Fig. 22, is for checking to see whether the difference between the reference value and the detection pulse count value for the N-th sampling less the detection pulse count value for the (N-1)th sampling exceeds a tolerance y. According to a further embodiment, the count value of reference pulses is not confined to an integration value, but the sum of a detection pulse count value and a reference pulse count value may be used for comparison or the difference between the two count values may be compared. A flow-chart associated with such an embodiment is realized by including step 205 in Fig. 19 and step 212 in Fig. 20 for determining the sum or difference between the reference pulse count value N and a corresponding detection pulse count value.

Although embodiments of the present invention are explained above with reference to an abnormal load detection system for a former, the present invention is applicable with equal effect also to other pressurizing apparatuses than the former.

## Claims

1. An abnormal load detection apparatus for a pressurizing apparatus, comprising:
power generation means (10, 14, 15) adapted for rotational motion and including a motor;
converter means (4) for converting the rotative kinetic energy into linear kinetic energy;
pressurizing means (5) for applying the linear kinetic energy to the work;
means (16, 20, 21, 22) for detecting a change in the load imposed on the work and converting it into an electrical signal;
means (9) for sampling said electrical signal at selected one of a plurality of pressurizing positions and a plurality of pressurizing time points;
means (9) for storing a normal value of the electrical signal corresponding to said sampling points;
means (9) for comparing a value obtained by said sampling with the normal value stored; and
means (9) for deciding on an abnormal load condition when the result of said comparison exceeds a predetermined value;
wherein
said means for detecting a load change and converting it into an electrical signal includes means (16) for detecting the power consumption of said motor;
characterised in that
said means (16, 9) for detecting the power consumption and converting it into an electrical signal includes means for converting the power consumption detected into a voltage according to the magnitude of the power, means for converting the voltage into a frequency and means for counting the frequency; and,
said sampling means includes means for sampling a count value of said counter.

2. An apparatus according to Claim 1, wherein said means for detecting a load change and converting it into an electrical signal includes means (20, 21, 22, 9) for converting a mechanical strain into an electrical signal.

3. An apparatus according to Claim 2, wherein
said means (20, 21, 22, 9) for converting a mechanical strain into an electrical signal includes means for converting the electrical signal into a frequency and means for counting the frequency, and
said sampling means includes means for sampling a count value of said counter.

4. An apparatus according to Claim 1 or 3, wherein said counting means includes means for counting the number of pulses generated between predetermined sampling processes as an output of said voltage-frequency conversion.

5. An apparatus according to Claim 1 or 3, wherein said counting means includes means for integrating and counting the number of pulses of said voltage-frequency conversion output.

6. An apparatus according to Claim 1 or claim 2, wherein said sampling means includes means for analog-digital (A/D) conversion of the electrical signal and means for storing a value obtained by the A/D conversion.

7. An apparatus according to Claim 6, wherein said comparator means includes means for adding a predetermined number of A/D conversion values and means for comparing the sum obtained with the normal value.

8. An apparatus according to Claim 1 or 3, wherein said sampling means includes:
means (17, 18) for detecting the rotational position of a power generation section in rotational motion;
pulse generation means operated by a signal from said rotational position detection means; and
means for sampling the count value by a pulse from said pulse generation means.

9. An apparatus according to Claim 8, wherein said pulse generation means includes an oscillator.

10. An apparatus according to Claim 8, wherein said pulse generation means includes means for counting the time according to a program.

11. An apparatus according to Claim 1 or 3, wherein said sampling means includes:
means (17, 18) for detecting the position of a pressurizing section in linear motion;
pulse generation means energized by a signal from said position detection means; and
means for sampling the count value by a pulse from said pulse generation means.

12. An apparatus according to Claim 11, wherein said pulse generation means includes an oscillator.

13. An apparatus according to Claim 11, wherein said pulse generation means includes means for counting the time according to a program.

14. An apparatus according to Claim 6, wherein said sampling means includes:
means (17, 18) for detecting the rotational position of the power generation section in rotational motion;
pulse generation means energized by a signal from said rotational position detection means; and
means for sampling the electrical signal by a pulse from the pulse generation means.

15. An apparatus according to Claim 14, wherein said pulse generation means includes an oscillator.

16. An apparatus according to Claim 14, wherein said pulse generation means includes means for counting the time according to a program.

17. An apparatus according to Claim 6, wherein said sampling means includes:
means (17, 18) for detecting the position of said pressurizing section in linear motion;
pulse generation means energized by a signal from said position detection means; and
means for sampling the electrical signal by a pulse from said pulse generation means.

18. An apparatus according to Claim 17, wherein said pulse generation means includes an oscillator.

19. An apparatus according to Claim 17, wherein said pulse generation means includes means for counting the time according to a program.

20. An apparatus according to Claim 1 or 3, wherein said sampling means includes means mounted on a rotary shaft (3) of the power generation section in rotary motion for performing the sampling operation by a pulse from a rotary pulse encoder (3).

21. An apparatus according to Claim 1 or 3, wherein said sampling means includes means mounted on the pressurizing section in linear motion for performing the sampling operation by a pulse from a linear pulse encoder (6).

22. An apparatus according to Claim 2 or 3, wherein said means (20, 22) for converting a mechanical strain into an electrical signal is mounted on a frame (11) of the pressurizing apparatus.

23. An apparatus according to Claim 2 or 3, wherein said means (21) for converting a mechanical strain into an electrical signal is embedded in a part where the work is pressurized.

24. An apparatus according to any one of Claims 1 to 3, wherein said means for determining a normal value includes means for determining an average value of the sampling values obtained from a plurality of pressurizing processes.

25. An abnormal load detection apparatus for a pressurizing apparatus, comprising:
power generation means (10) adapted for rotational motion;
conversion means (4) for converting the rotational kinetic energy into the linear kinetic energy;
pressurizing means (5) adapted for linear motion by the linear kinetic energy;
means (3, 6) for detecting the displacement due to a mechanical strain between said pressurizing means and said power generation means as a signal representing a load condition under pressurization; and
means (9) for detecting an abnormal load condition from a change in strain displacement detected.

26. An apparatus according to Claim 25, wherein said means for detecting a displacement due to a mechanical strain includes:
means (3) for detecting the amount of rotational displacement of a rotary shaft in rotational motion; and
means (6) for detecting the amount of linear displacement of said pressurizing means,
said means (9) for detecting an abnormal load condition includes:
means for sampling and storing the amount of rotational displacement and the amount of linear displacement at predetermined regular time intervals in a pressurizing process;
means for comparing the amount of rotational displacement and the amount of linear displacement stored as above with the amount of rotational displacement and the amount of linear displacement sampled anew in a new pressurizing process; and
means for producing a signal notifying a fault when the amount of rotational displacement and the amount of linear displacement sampled anew exceed the amount of rotational displacement and the amount of linear displacement stored respectively by a predetermined tolerance.

27. An apparatus according to Claim 26, wherein said means for detecting the amount of rotational displacement includes a rotary pulse encoder (3),
said means for detecting the amount of linear displacement includes a linear pulse encoder (6), whereby the amount of rotational displacement is represented as a count value of pulses from the rotary pulse encoder(3), and
the timing of sampling at regular time intervals substantially coincides with the timing of the pulses produced from selected one of the two pulse encoders.

28. An apparatus according to Claim 27, wherein the timing of sampling substantially coincides with the timing of pulses produced from said linear pulse encoder.

29. An apparatus according to Claim 28, wherein said storage means stores the number of pulses generated from said rotary pulse encoder (3) between the (N-1)th (N: Integer) sampling operation and the N-th sampling operation, and said comparison means includes means for comparing the number of pulses generated from said rotary pulse encoder (3) between the (N-1)th sampling operation and the N-th sampling operation effected anew in a new pressurizing process with the number of pulses stored.

30. An apparatus according to Claim 27, wherein the timing of sampling substantially coincides with the timing of the pulses produced from the rotary pulse encoder (3).

31. An apparatus according to Claim 30, wherein said storage means stores the number of pulses generated from said linear pulse encoder between the (N-1)th (N: Integer) sampling operation and the N-th sampling operation, and said comparison means includes means for comparing the number of pulses generated from the linear pulse encoder (6) between the (N-1)th and N-th sampling operations effected anew in a new pressurizing process with the number of pulses stored.

32. An apparatus according to Claim 27, wherein said storage means includes means for storing an average value of the amount of rotational displacement and that of the amount of linear displacement obtained by repeating a predetermined number of pressurizing processes.

33. An apparatus according to Claim 32, wherein said means (9) for selecting a predetermined number of pressurizing processes (9) includes means for selecting the first number n (n: Given integer) of a plurality of continuously-conducted pressurizing processes.

34. An apparatus according to Claim 32, wherein said means (9) for selecting a predetermined number of pressurizing processes includes means for selecting a number n (n: Given integer) of pressurizing processes already conducted continuously.

35. An apparatus according to Claim 32, wherein said means (9) for selecting a predetermined number of pressurizing processes includes means adapted for switching between the first number n of a plurality of continuously-conducted pressurizing processes and a given number n (n: Given integer) of pressurizing processes already conducted.

36. A method of abnormal load detection comprising:
the step of detecting a load change of the work and converting the detection into an electrical signal;
the step (32, 41) of sampling the electrical signal converted at selected one of a plurality of pressurizing positions and a plurality of points of pressurizing time;
the step (42) of comparing the sample value with a normal value of the electrical signal corresponding to the sampling point; and
the step (42, 43, 44) of deciding on an abnormal load condition when the result of comparison exceeds a predetermined tolerance; wherein said step of detecting a load change and converting it into an electrical signal includes the step of detecting the power consumption of a motor; characterised in that said step of converting a load change into an electrical signal includes the steps of converting the electrical signal into a frequency and counting the frequency; and
said step of sampling includes the step of sampling the count value of said counter.

37. A method according to Claim 36, wherein said step of detecting a load change and converting it into an electrical signal includes the step of detecting the mechanical strain of said pressurizing apparatus.

38. A method according to Claim 36 or 37, wherein said step of sampling includes the step of A/D conversion of the sampled electrical signal.

39. A method according to Claim 38, wherein said step of comparison includes the step of adding the A/D-converted values and the step of comparing the added value of A/D conversion with said normal value.

40. A method of abnormal load detection for a pressurizing apparatus comprising power generation means (10) adapted for rotational motion, means (4) for converting the rotational kinetic energy into the linear kinetic energy and pressurizing means (5) adapted for linear motion by the linear kinetic energy,
said method comprising the steps of detecting a displacement due to the mechanical strain between said power generation means and said pressurizing means as a signal representing a load condition and detecting an abnormal load condition from a change in the displacement due to strain detected as above.

41. A method according to Claim 40, wherein said step of detecting the displacement due to mechanical strain includes the step (101, 102, 103, 111, 201, 202, 203, 211) of counting the number of pulses generated from a pulse encoder (3) for detecting the amount of rotational displacement of a rotary shaft (2) in rotational motion and a pulse encoder (6) for detecting the amount of linear displacement of the pressurizing means (5), and
said step of detecting an abnormal load condition includes the step (112, 131, 212, 231) of detecting an abnormal load condition from the difference between the count values generated from said two pulse encoders.

## Patentansprüche

1. Vorrichtung zum Erfassen von ungewöhnlichen Lasten für ein Preßgerät, enthaltend:
Energieerzeugungsmittel (10, 14, 15), die eine Drehbewegung ausführen können und einen Motor enthalten;
Umwandlungsmittel (4), um die rotatorische kinetische Energie in translatorische kinetische Energie umzuwandeln;
Preßmittel (5), um die translatorische kinetische Energie auf das Werkstück aufzubringen;
Mittel (16, 20, 21, 22), um eine Veränderung der auf das Werkstück aufgebrachten Last zu erfassen und diese Veränderung in ein elektrisches Signal umzusetzen;
Mittel (9), um das elektrische Signal in einer ausgewählten Preßstellung von mehreren Preßstellungen und in einem ausgewählten Preßzeitpunkt von mehreren Preßzeitpunkte abzutasten;
Mittel (9), um einen Normalwert des elektrischen Signals zu speichern, der den Abtastpunkten entspricht;
Mittel (9), um einen durch das Abtasten erhaltenen Wert mit dem gespeicherten Normalwert zu vergleichen; und
Mittel (9), um einen ungewöhnlichen Lastzustand festzustellen, wenn das Ergebnis des Vergleichs einen vorbestimmten Wert überschreitet;
wobei die Mittel zum Erfassen einer Lastveränderung und Umsetzen dieser Lastveränderung in ein elektrisches Signal Mittel (16) zum Erfassen der Leistungsaufnahme des Motors enthalten;
dadurch gekennzeichnet, daß die Mittel (16, 9) zum Erfassen der Leistungsaufnahme und Umsetzen der Leistungsaufnahme in ein elektrisches Signal Mittel zum Umsetzen der erfaßten Leistungsaufnahme in eine Spannung entsprechend der Größe der Leistung enthalten, Mittel zum Umsetzen der Spannung in eine Frequenz und Mittel zum Zählen der Frequenz; und
daß die Abtastmittel Mittel zum Abtasten eines Zählwertes des Zählers enthalten.

2. Vorrichtung nach Anspruch 1, bei der die Mittel zum Erfassen einer Lastveränderung und Umsetzen der Lastveränderung in ein elektrisches Signal Mittel (20, 21, 22, 9) zum Umsetzen einer mechanischen Belastung in ein elektrisches Signal enthalten.

3. Vorrichtung nach Anspruch 2, bei der die Mittel (20, 21, 22, 9) zum Umsetzen einer mechanischen Belastung in ein elektrisches Signal Mittel zum Umsetzen des elektrischen Signals in eine Frequenz und Mittel zum Zählen der Frequenz enthalten, und
bei der die Abtastmittel Mittel zum Abtasten eines Zählwertes des Zählers enthalten.

4. Vorrichtung nach Anspruch 1 oder 3, bei der die Zählmittel Mittel zum Zählen der Anzahl von Impulsen enthalten, die als Ergebnis der Spannungs-Frequenz-Umsetzung zwischen vorbestimmten Abtastvorgängen erzeugt wurden.

5. Vorrichtung nach Anspruch 1 oder 3, bei der die Zählmittel Mittel zum Integrieren und Zahlen der Anzahl der Impulse des Ergebnisses der Spannungs-Frequenz-Umsetzung enthalten.

6. Vorrichtung nach Anspruch 1 oder Anspruch 2, bei der die Abtastmittel Mittel für eine A/D-Umsetzung des elektrischen Signals und Mittel zum Speichern eines durch die A/D-Umsetzung erhaltenen Wertes enthalten.

7. Vorrichtung nach Anspruch 6, bei der die Vergleichermittel Mittel zum Addieren einer vorbestimmten Anzahl von Werten der A/D-Umsetzung und Mittel zum Vergleichen der erhaltenen Summe mit dem Normalwert enthalten.

8. Vorrichtung nach Anspruch 1 oder 3, bei der die Abtastmittel enthalten:
Mittel (17, 18) zum Erfassen der Drehstellung eines sich rotatorisch bewegenden Energieerzeugungsabschnittes;
Impulserzeugungsmittel, die durch ein Signal von den Drehstellungserfassungsmitteln betätigt werden; und
Mittel zum Abtasten des Zählwertes durch einen Impuls von den Impulserzeugungsmitteln.

9. Vorrichtung nach Anspruch 8, bei der die Impulserzeugungsmittel einen Oszillator enthalten.

10. Vorrichtung nach Anspruch 8, bei der die Impulserzeugungsmittel Mittel zum Zählen der Zeit gemäß einem Programm enthalten.

11. Vorrichtung nach Anspruch 1 oder 3, bei der die Abtastmittel enthalten:
Mittel (17, 18) zum Erfassen der Stellung eines sich translatorisch bewegenden Preßabschnittes;
Impulserzeugungsmittel, die von einem Signal der Stellungserfassungsmittel erregt werden; und
Mittel zum Abtasten des Zählwertes durch einen Impuls von den Impulserzeugungsmitteln.

12. Vorrichtung nach Anspruch 11, bei der die Impulserzeugungsmittel einen Oszillator enthalten.

13. Vorrichtung nach Anspruch 11, bei der die Impulserzeugungsmittel Mittel zum Zählen der Zeit gemäß einem Programm enthalten.

14. Vorrichtung nach Anspruch 6, bei der die Zählmittel enthalten:
Mittel (17, 18) zum Erfassen der Drehstellung eines sich rotatorisch bewegenden Energieerzeugungsabschnittes;
Impulserzeugungsmittel, die von einem Signal von den Drehstellungserfassungsmitteln erregt werden; und
Mittel zum Abtasten des elektrischen Signals durch einen Impuls von den Impulserzeugungsmitteln.

15. Vorrichtung nach Anspruch 14, bei der die Impulserzeugungsmittel einen Oszillator enthalten.

16. Vorrichtung nach Anspruch 14, bei der die Impulserzeugungsmittel Mittel zum Zählen der Zeit gemäß einem Programm enthalten.

17. Vorrichtung nach Anspruch 6, bei der die Abtastmittel enthalten:
Mittel (17, 18) zum Erfassen der Stellung des sich translatorisch bewegenden Preßabschnittes;
Impulserzeugungsmittel, die von einem Signal der Stellungserfassungsmittel erregt werden; und
Mittel zum Abtasten des elektrischen Signals durch einen Impuls von den Impulserzeugungsmitteln.

18. Vorrichtung nach Anspruch 17, bei der die Impulserzeugungsmittel einen Oszillator enthalten.

19. Vorrichtung nach Anspruch 17, bei der die Impulserzeugungsmittel Mittel zum Zählen der Zeit gemäß einem Programm enthalten.

20. Vorrichtung nach Anspruch 1 oder 3, bei der die Abtastmittel auf einer Drehwelle (3) des sich rotatorisch bewegenden Energieerzeugungsabschnittes angebrachte Mittel zum Durchführen des Abtastvorganges durch einen Impuls von einem Rotationsimpulscodierer (3) enthalten.

21. Vorrichtung nach Anspruch 1 oder 3, bei der die Abtastmittel auf einem sich translatorisch bewegenden Preßabschnitt angebrachte Mittel zum Durchführen des Abtastvorganges durch einen Impuls von einem Translationsimpulscodierer (6) enthalten.

22. Vorrichtung nach Anspruch 2 oder 3, bei der die Mittel (20, 22) zum Umsetzen einer mechanischen Belastung in ein elektrisches Signal auf einem Rahmen (11) des Preßgerätes angebracht sind.

23. Vorrichtung nach Anspruch 2 oder 3, bei der die Mittel (21) zum Umsetzen einer mechanischen Belastung in ein elektrisches Signal dort in ein Element eingebettet sind, wo das Werkstück gepreßt wird.

24. Vorrichtung nach einem der Ansprüche 1 bis 3, bei der die Mittel zum Bestimmen eines Normalwertes Mittel zum Bestimmen eines Durchschnittswertes der Abtastwerte enthalten, die aus mehreren Preßvorgängen erhalten wurden.

25. Vorrichtung zum Erfassen von ungewöhnlichen Lasten für ein Preßgerät, enthaltend:
für eine Rotationsbewegung ausgelegte Energieerzeugungsmittel (10);
Umwandlungsmittel (4) zum Umwandeln der rotatorischen kinetischen Energie in eine translatorische kinetische Energie;
Preßmittel (5), die in der Lage sind, aufgrund der translatorischen kinetischen Energie eine translatorische Bewegung auszuführen;
Mittel (3, 6) zum Erfassen der von einer mechanischen Belastung zwischen dem Preßmittel und dem Energieerzeugungsmittel bewirkten Verstellung als ein einen Preßlastzustand darstellendes Signal; und
Mittel (9) zum Erfassen eines ungewöhnlichen Lastzustandes aus einer Veränderung der erfaßten Verstellung aufgrund der Spannungen.

26. Vorrichtung nach Anspruch 25, bei der die Mittel zum Erfassen einer Verstellung aufgrund einer mechanischen Belastung enthalten:
Mittel (3) zum Erfassen des Betrages einer rotatorischen Verstellung einer sich rotatorisch bewegenden Rotationswelle; und
Mittel (6) zum Erfassen des Betrages der linearen Verstellung der Preßmittel, wobei die Mittel (9) zum Erfassen eines ungewöhnlichen Lastzustandes enthalten:
Mittel zum Abtasten und Speichern des Betrages der Rotationsverstellung und des Betrages der Translationsverstellung in vorbestimmen, regelmäßigen Zeitintervallen in einem Preßprozeß;
Mittel zum Vergleichen des wie oben erwähnt gespeicherten Betrages der Rotationsverstellung und des Betrages der Translationsverstellung mit dem in einem neuen Preßprozeß erneut abgetasteten Betrag der Rotationsverstellung und dem erneut abgetasteten Betrag der Translationsverstellung; und
Mittel zum Erzeugen eines einen Fehler anzeigenden Signales, wenn der erneut abgetastete Betrag der Rotationsverstellung bzw. der erneut abgetastete Betrag der Translationsverstellung den gespeicherten Betrag der Rotationsverstellung bzw. den gespeicherten Betrag der Translationsverstellung um einen vorbestimmten Toleranzwert überschreitet.

27. Vorrichtung nach Anspruch 26, bei der die Mittel zum Erfassen des Betrages der Rotationsverstellung einen Rotationsimpulscodierer (3) enthalten;
bei der die Mittel zum Erfassen des Betrages der Translationsverstellung einen Translationsimpulscodierer (6) enthalten, wodurch der Betrag der Rotationsverstellung als ein Zählwert von Impulsen des Rotationsimpulcodierers (3) dargestellt ist, und
bei der die Zeiteinteilung des Abtastens in gleichmäßigen Zeitintervallen im wesentlichen mit der Zeiteinteilung der von einem ausgewählten der beiden Impulscodierer erzeugten Impulse übereinstimmt.

28. Vorrichtung nach Anspruch 27, bei der die Zeiteinteilung des Abtastens im wesentlichen mit der Zeiteinteilung der von dem Translationsimpulscodierer erzeugten Impulse übereinstimmt.

29. Vorrichtung nach Anspruch 28, bei der die Speichermittel die Anzahl der von dem Rotationsimpulscodierer (3) zwischen dem (N-1)ten Abtastvorgang und dem N-ten Abtastvorgang erzeugten Impulse speichern (wobei N eine ganze Zahl ist), und bei der die Vergleichermittel Mittel zum Vergleichen der Anzahl der von dem Rotationsimpulscodierer (3) zwischen dem (N-1)ten Abtastvorgang und dem N-ten Abtastvorgang in einem neuen Preßprozeß erneut erzeugten Impulse mit der Anzahl der gespeicherten Impulse enthalten.

30. Vorrichtung nach Anspruch 27, bei der die Zeiteinteilung des Abtastens im wesentlichen mit der Zeiteinteilung der von dem Rotationsimpulscodierer (3) erzeugten Impulse übereinstimmt.

31. Vorrichtung nach Anspruch 30, bei der die Speichermittel die Anzahl der von dem Translationsimpulscodierer zwischen dem (N-1)ten Abtastvorgang und dem N-ten Abtastvorgang erzeugten Impulse speichern (wobei N eine ganze Zahl ist), und bei der die Vergleichermittel Mittel zum Vergleichen der Anzahl der von dem Translationsimpulscodierer (6) zwischen dem (N-1)ten und dem N-ten Abtastvorgang in einem neuen Preßprozeß erneut erzeugten Impulse mit der Anzahl der gespeicherten Impulse enthalten.

32. Vorrichtung nach Anspruch 27, bei der die Speichermittel Mittel zum Speichern eines Durchschnittswertes der Beträge der Rotationsverstellung und der Translationsverstellung enthalten, die durch ein Wiederholen einer vorbestimmten Anzahl von Preßvorgängen erhalten werden.

33. Vorrichtung nach Anspruch 32, bei der die Mittel (9) zum Auswählen einer vorbestimmten Anzahl von Preßvorgängen Mittel zum Auswählen einer ersten Anzahl n von mehreren aufeinanderfolgend durchgeführten Preßvorgängen enthalten (wobei n eine gegebene ganze Zahl ist).

34. Vorrichtung nach Anspruch 32, bei der die Mittel (9) zum Auswählen einer vorbestimmten Anzahl von Preßvorgängen Mittel zum Auswählen einer Anzahl n von bereits aufeinanderfolgend durchgeführten Preßvorgängen enthalten (wobei n eine gegebene ganze Zahl ist).

35. Vorrichtung nach Anspruch 32, bei der die Mittel (9) zum Auswählen einer vorbestimmten Anzahl von Preßvorgängen Mittel enthalten, die dafür ausgelegt sind, zwischen der ersten Anzahl n von mehreren aufeinanderfolgend durchgeführten Preßvorgänge und einer gegebenen Anzahl n von bereits durchgeführten Preßvorgängen umzuschalten (wobei n eine gegebene ganze Zahl ist).

36. Verfahren zum Erfassen einer ungewöhnlichen Last, enthaltend:
den Schritt des Erfassens einer Veränderung der an das Werkstück angelegten Last und Umsetzens der Erfassung in ein elektrisches Signal;
den Schritt (32, 41) des Abtastens des umgesetzten elektrischen Signals in einer ausgewählten von mehreren Preßstellungen und in einem ausgewählten von mehreren Preßzeitpunkte;
den Schritt (42) des Vergleichens des abgetasteten Wertes mit einem Normalwert des elektrischen Signals, der der Abtaststelle entspricht; und
den Schritt (42, 43, 44) des Feststellens eines ungewöhnlichen Lastzustandes, wenn das Ergebnis des Vergleichs einen vorbestimmten Toleranzwert überschreitet;
wobei der Schritt des Erfassens einer Lasrveränderung und Umsetzens dieser Lastveränderung in ein elektrisches Signal den Schritt des Erfassens der Leistungsaufnahme eines Motors enthält;
dadurch gekennzeichnet, daß der Schritt des Umsetzens einer Lastveränderung in ein elektrisches Signal die Schritte des Umsetzens des elektrischen Signals in eine Frequenz und des Zählens der Frequenz enthält; und
wobei der Schritt des Abtastens den Schritt des Abtastens des Zählwertes des Zählers enthält.

37. Verfahren nach Anspruch 36, bei dem der Schritt des Erfassens einer Lastveränderung und Umsetzens dieser Lastveränderung in ein elektrisches Signal den Schritt des Erfassens der mechanischen Belastung des Preßgerätes enthält.

38. Verfahren nach Anspruch 36 oder 37, bei dem der Schritt des Abtastens den Schritt einer A/D-Umsetzung des abgetasteten elektrischen Signals enthält.

39. Verfahren nach Anspruch 38, bei dem der Schritt des Vergleichens den Schritt des Aufaddierens der A/D-umgesetzten Werte und der Schritt des Vergleichens der aufaddierten Werte der A/D-Umsetzung mit dem Normalwert enthält.

40. Verfahren zum Erfassen einer ungewöhnlichen Last für ein Preßgerät mit zum Ausführen einer Rotationsbewegung ausgelegten Energieerzeugungsmitteln (10), Mitteln (4) zum Umwandeln der rotatorischen kinetischen Energie in translatorische kinetische Energie und Preßmitteln (5), die dafür ausgelegt sind, aufgrund der translatorischen kinetischen Energie eine translatorische Bewegung auszuführen,
wobei das Verfahren die Schritte des Erfassens einer Verstellung aufgrund der mechanischen Belastung zwischen dem Energieerzeugungsmittel und dem Preßmittel als ein einen Lastzustand darstellendes Signal und des Erfassens eines ungewöhnlichen Lastzustandes aufgrund einer Veränderung der wie oben erwähnt erfaßten Verstellung aufgrund der mechanischen Belastung enthält.

41. Verfahren nach Anspruch 40, bei dem der Schritt des Erfassens der Verstellung aufgrund einer mechanischen Belastung den Schritt (101, 102, 103, 111, 201, 202, 203, 211) des Zählens der Anzahl der von einem Impulscodierer (3) erzeugten Impulse enthält, um den Betrag der Rotationsverstellung einer sich rotatorisch bewegenden Rotationswelle (2) zu erfassen, sowie der von einem Impulscodierer (6) erzeugten Impulse, um den Betrag der Translationsverstellungen des Preßmittels (5) zu erfassen, und
bei dem der Schritt des Erfassens eines ungewöhnlichen Lastzustandes den Schritt (112, 131, 212, 231) des Erfassens eines ungewöhnlichen Lastzustandes aufgrund der Differenz zwischen den von den beiden Impulscodierern erzeugten Zählwerten enthält.

## Revendications

1. Appareil de détection d'une charge anormale pour un appareil de mise en pression, comportant :
des moyens (10, 14, 15) de génération de puissance conçus pour un mouvement de rotation et comprenant un moteur ;
des moyens convertisseurs (4) destinés à convertir l'énergie cinétique rotative en énergie cinétique linéaire ;
des moyens (5) de mise en pression destinés à appliquer l'énergie cinétique linéaire à une pièce ;
des moyens (16, 20, 21, 22) destinés à détecter un changement de la charge imposée à la pièce et à le convertir en un signal électrique ;
les moyens (9) destinés à échantillonner ledit signal électrique dans l'une, choisie, de plusieurs positions de mise en pression et à l'un choisi, de plusieurs instants de mise en pression ;
des moyens (9) destinés à stocker une valeur normale du signal électrique correspondant auxdits points d'échantillonnage ;
des moyens (9) destinés à comparer une valeur obtenue par ledit échantillonnage avec la valeur normale stockée ; et
des moyens (9) destinés à décider d'une condition de charge anormale lorsque le résultat de ladite comparaison dépasse une valeur prédéterminée ; dans lesquels lesdits moyens destinés à détecter un changement de la charge et à le convertir en un signal électrique comprennent des moyens (16) destinés à détecter la consommation de puissance dudit moteur ; caractérisé en ce que
lesdits moyens (16, 9) destinés à détecter la consommation de puissance et à la convertir en un signal électrique comprennent des moyens destinés à convertir la consommation de puissance détectée en une tension en fonction de l'amplitude de la puissance, des moyens destinés à convertir la tension en une fréquence et des moyens destinés à compter la fréquence ; et
lesdits moyens d'échantillonnage comprennent des moyens destinés à échantillonner une valeur de comptage dudit compteur.

2. Appareil selon la revendication 1, dans lequel lesdits moyens destinés à détecter un changement de la charge et à le convertir en un signal électrique comprennent des moyens (20, 21, 22, 9) destinés à convertir une déformation mécanique en un signal électrique.

3. Appareil selon la revendication 2, dans lequel lesdits moyens (20, 21, 22, 9) destinés à convertir une déformation mécanique en un signal électrique comprennent des moyens destinés à convertir le signal électrique en une fréquence et des moyens destinés à compter la fréquence, et
lesdits moyens d'échantillonnage comprennent des moyens destinés à échantillonner une valeur de comptage dudit compteur.

4. Appareil selon la revendication 1 ou 3, dans lequel lesdits moyens de comptage comprennent des moyens destinés à compter le nombre d'impulsions générées entre des processus d'échantillonnage prédéterminés en tant que signal de sortie de ladite conversion tension-fréquence.

5. Appareil selon la revendication 1 ou 3, dans lequel lesdits moyens de comptage comprennent des moyens destinés à intégrer et compter le nombre d'impulsions dudit signal de sortie de la conversion tension-fréquence.

6. Appareil selon la revendication 1 ou la revendication 2, dans lequel lesdits moyens d'échantillonnage comprennent des moyens destinés à effectuer une conversion analogique-numérique (A/N) du signal électrique et des moyens destinés à stocker une valeur obtenue par la conversion (A/N).

7. Appareil selon la revendication 6, dans lequel lesdits moyens de comparaison comprennent des moyens destinés à additionner un nombre prédéterminé de valeurs de conversion A/N et des moyens destinés à comparer la somme obtenue avec la valeur normale.

8. Appareil selon la revendication 1 ou 3, dans lequel lesdits moyens d'échantillonnage comprennent :
des moyens (17, 18) destinés à détecter la position en rotation d'une section de génération de puissance dans un mouvement de rotation ;
des moyens de génération d'impulsions activés par un signal provenant desdits moyens de détection de position en rotation ; et
des moyens pour échantillonner la valeur de comptage par une impulsion provenant desdits moyens de génération d'impulsions.

9. Appareil selon la revendication 8, dans lequel lesdits moyens de génération d'impulsions comprennent un oscillateur.

10. Appareil selon la revendication 8, dans lequel lesdits moyens de génération d'impulsions comprennent des moyens destinés à compter le temps conformément à un programme.

11. Appareil selon la revendication 1 ou 3, dans lequel lesdits moyens d'échantillonnage comprennent :
des moyens (17, 18) destinés à détecter la position d'une partie de mise en pression dans un mouvement linéaire ;
des moyens de génération d'impulsions excités par un signal provenant desdits moyens de détection de position ; et
des moyens destinés à échantillonner la valeur de comptage par une impulsion provenant desdits moyens de génération d'impulsions.

12. Appareil selon la revendication 11, dans lequel lesdits moyens de génération d'impulsions comprennent un oscillateur.

13. Appareil selon la revendication 11, dans lequel lesdits moyens de génération d'impulsions comprennent des moyens destinés à compter le temps conformément à un programme.

14. Appareil selon la revendication 6, dans lequel lesdits moyens d'échantillonnage comprennent :
des moyens (17, 18) destinés à détecter la position en rotation de la partie de génération de puissance dans un mouvement de rotation ;
des moyens de génération d'impulsions excités par un signal provenant desdits moyens de détection de position en rotation ; et
des moyens destinés à échantillonner le signal électrique par une impulsion provenant des moyens de génération d'impulsions.

15. Appareil selon la revendication 14, dans lequel lesdits moyens de génération d'impulsions comprennent un oscillateur.

16. Appareil selon la revendication 14, dans lequel lesdits moyens de génération d'impulsions comprennent des moyens destinés à compter le temps conformément à un programme.

17. Appareil selon la revendication 6, dans lequel lesdits moyens d'échantillonnage comprennent :
des moyens (17, 18) destinés à détecter la position de ladite partie de mise en pression dans un mouvement linéaire ;
des moyens de génération d'impulsions excités par un signal provenant desdits moyens de détection de position ; et
des moyens destinés à échantillonner le signal électrique par une impulsion provenant desdits moyens de génération d'impulsions.

18. Appareil selon la revendication 17, dans lequel lesdits moyens de génération d'impulsions comprennent un oscillateur.

19. Appareil selon la revendication 17, dans lequel lesdits moyens de génération d'impulsions comprennent des moyens destinés à compter le temps conformément à un programme.

20. Appareil selon la revendication 1 ou 3, dans lequel lesdits moyens d'échantillonnage comprennent des moyens montés sur un arbre tournant (3) de la partie de génération de puissance en mouvement tournant pour effectuer l'opération d'échantillonnage par une impulsion provenant d'un codeur tournant (3) à impulsions.

21. Appareil selon la revendication 1 ou 3, dans lequel lesdits moyens d'échantillonnage comprennent des moyens montés sur la partie de mise en pression dans un mouvement linéaire pour effectuer l'opération d'échantillonnage par une impulsion provenant d'un codeur linéaire (6) à impulsions.

22. Appareil selon la revendication 2 ou 3, dans lequel lesdits moyens (20, 22) destinés à convertir une déformation mécanique ou une impulsion électrique sont montés sur un bâti (11) de l'appareil de mise en pression.

23. Appareil selon la revendication 2 ou 3, dans lequel lesdits moyens (21) destinés à convertir un effort mécanique en un signal électrique sont encastrés dans une partie où la pièce est mise en pression.

24. Appareil selon l'une quelconque des revendications 1 à 3, dans lequel lesdits moyens destinés à déterminer une valeur normale comprennent des moyens destinés à déterminer une valeur moyenne des valeurs d'échantillonnage obtenues à partir de plusieurs processus de mise en pression.

25. Appareil de détection d'une charge anormale pour un appareil de mise en pression, comportant :
des moyens (10) de génération de puissance conçus pour un mouvement de rotation ;
des moyens de conversion (4) destinés à convertir l'énergie cinétique de rotation en énergie cinétique linéaire ;
des moyens (5) de mise en pression destinés à être mis en mouvement linéaire par l'énergie cinétique linéaire ;
des moyens (3, 6) destinés à détecter le déplacement dû à un effort mécanique entre lesdits moyens de mise en pression et lesdits moyens de génération de puissance, en tant que signal représentant une condition de charge sous une mise en pression ; et
des moyens (9) destinés à détecter une condition de charge anormale à partir d'une variation dans un déplacement de déformation détecté.

26. Appareil selon la revendication 25, dans lequel lesdits moyens de détection d'un déplacement dû à une déformation mécanique comprennent :
des moyens (3) destinés à détecter l'amplitude du déplacement en rotation d'un arbre tournant dans un mouvement de rotation ; et
des moyens (6) destinés à détecter l'amplitude de déplacement linéaire desdits moyens de mise en pression,
lesdits moyens (9) destinés à détecter une condition de charge anormale comprenant :
des moyens destinés à échantillonner et stocker l'amplitude du déplacement en rotation et l'amplitude de déplacement linéaire à des intervalles de temps réguliers et prédéterminés dans un processus de mise en pression ;
des moyens destinés à comparer l'amplitude du déplacement en rotation et l'amplitude du déplacement linéaire stockées comme ci-dessus avec l'amplitude de déplacement en rotation et l'amplitude du déplacement linéaire échantillonnée de nouveau dans un nouveau processus de mise en pression ; et
des moyens destinés à produire un signal indiquant un défaut lorsque l'amplitude de déplacement en rotation et l'amplitude du déplacement linéaire échantillonnées de nouveau dépassent d'une tolérance prédéterminée l'amplitude du déplacement en rotation et l'amplitude du déplacement linéaire stockées, respectivement.

27. Appareil selon la revendication 26, dans lequel lesdits moyens destinés à détecter l'amplitude du déplacement en rotation comprennent un codeur tournant (3) à impulsions,
lesdits moyens destinés à détecter l'amplitude du déplacement linéaire comprennent un codeur linéaire (6) à impulsions, grâce à quoi l'amplitude du déplacement en rotation est représentée par une valeur de comptage d'impulsions provenant du codeur tournant (3) à impulsions, et
le temps d'échantillonnage à intervalles de temps réguliers coïncide sensiblement avec le temps des impulsions produites à partir de l'un, choisi, des deux codeurs à impulsions.

28. Appareil selon la revendication 27, dans lequel le temps d'échantillonnage coïncide sensiblement avec le temps des impulsions produites par ledit codeur linéaire à impulsions.

29. Appareil selon la revendication 28, dans lequel lesdits moyens de stockage stockent le nombre d'impulsions générées à partir dudit codeur tournant (3) à impulsions entre la (N-1) ième (N:entier) (opération d'échantillonnage et la N-ième opération d'échantillonnage, et lesdits moyens de comparaison comprennent des moyens destinés à comparer le nombre d'impulsions générées à partir dudit codeur tournant (3) à impulsions entre la (N-1)ième opération d'échantillonnage et la N-ième opération d'échantillonnage effectuée de nouveau dans un nouveau processus de mise en pression avec le nombre d'impulsions stockées.

30. Appareil selon la revendication 27, dans lequel le temps d'échantillonnage coïncide sensiblement avec le temps des impulsions produites par le codeur tournant (3) à impulsions.

31. Appareil selon la revendication 30, dans lequel lesdits moyens de stockage stockent le nombre d'impulsions générées à partir dudit codeur linéaire à impulsions entre la (N-1) ième (N:entier) (opération d'échantillonnage et la N-ième opérations d'échantillonnage, et lesdits moyens de comparaison comprennent des moyens destinés à comparer le nombre d'impulsions générées par le codeur linéaire (6) à impulsions entre les (N-1)ième et N-ième opérations d'échantillonnage effectuées de nouveau dans un nouveau processus de mise en pression, avec le nombre d'impulsions stockées.

32. Appareil selon la revendication 27, dans lequel lesdits moyens de stockage comprennent des moyens destinés à stocker une valeur moyenne de l'amplitude du déplacement en rotation et celle de l'amplitude du déplacement linéaire obtenues par une répétition d'un nombre prédéterminé de processus de mise en pression.

33. Appareil selon la revendication 32, dans lequel lesdits moyens (9) destinés à choisir un nombre prédéterminé de processus (9) de mise en pression comprennent des moyens destinés à choisir le premier nombre n (n : entier donné) de plusieurs processus de mise en pression effectués en continu.

34. Appareil selon la revendication 32, dans lequel lesdits moyens (9) destinés à choisir un nombre prédéterminé de processus de mise en pression comprennent les moyens destinés à choisir un nombre n (n : entier donné) de processus de mise en pression déjà effectués en continu.

35. Appareil selon la revendication 32, dans lequel lesdits moyens (9) destinés à choisir un nombre prédéterminé de processus de mise en pression comprennent des moyens destinés à commuter entre le premier nombre n de plusieurs processus de mise sous pression effectués en continu et un nombre donné n (n : entier donné) de processus de mise en pression déjà effectués.

36. Procédé de détection d'une charge anormale, comprenant :
l'étape de détection d'un changement de charge de la pièce et de conversion de la détection en un signal électrique ;
l'étape (32, 31) d'échantillonnage du signal électrique converti à l'une, choisie, de plusieurs positions de mise en pression et de plusieurs instants de mise en pression ;
l'étape (42) de comparaison de la valeur d'échantillonnage avec une valeur normale du signal électrique correspondant au point d'échantillonnage ; et
l'étape (42, 43, 44) de décision d'une condition de charge anormale lorsque le résultat de la comparaison dépasse une tolérance prédéterminée ; dans lequel ladite étape de détection d'un changement de charge et de sa conversion en un signal électrique comprend l'étape de détection de la consommation de puissance d'un moteur ; caractérisé en ce que ladite étape de conversion d'un changement de charge en un signal électrique comprend les étapes de conversion du signal électrique en une fréquence et de comptage de la fréquence ; et
ladite étape d'échantillonnage comprend l'étape d'échantillonnage de la valeur de comptage dudit compteur.

37. Procédé selon la revendication 36, dans lequel ladite étape de détection d'un changement de charge et de sa conversion en un signal électrique comprend l'étape de détection de la déformation mécanique dudit appareil de mise en pression.

38. Procédé selon la revendication 36 ou 37, dans lequel ladite étape d'échantillonnage comprend l'étape de conversion A/N du signal électrique échantillonné.

39. Procédé selon la revendication 38, dans lequel ladite étape de comparaison comprend l'étape d'addition des valeurs converties A/N et l'étape de comparaison de la valeur additionnée de la conversion A/N avec ladite valeur normale.

40. Procédé de détection d'une charge anormale pour un appareil de mise en pression comportant des moyens (10) de génération de puissance conçus pour un mouvement tournant, des moyens (4) destinés à convertir l'énergie cinétique tournante en énergie cinétique linéaire et des moyens (5) de mise en pression conçus pour être animés d'un mouvement linéaire par l'énergie cinétique linéaire,
ledit procédé comprenant les étapes de détection d'un déplacement dû à la déformation mécanique entre lesdits moyens de génération de puissance et lesdits moyens de mise en pression, sous forme d'un signal représentant une condition de charge, et de détection d'une condition de charge anormale à partir d'une variation du déplacement due à une déformation détectée comme ci-dessus.

41. Procédé selon la revendication 40, dans lequel ladite étape de détection du déplacement dû à une déformation mécanique comprend l'étape (101, 102, 103, 111, 201, 202, 203, 211) de comptage du nombre d'impulsions générées par un codeur (3) à impulsions pour détecter l'amplitude du déplacement en rotation d'un arbre tournant (2) dans un mouvement de rotation et un codeur (6) à impulsions destiné à détecter l'amplitude du déplacement linéaire des moyens (5) de mise en pression, et
ladite étape de détection d'une condition de charge anormale comprend l'étape (112, 131, 212, 231) de détection d'une condition de charge normale d'après la différence entre les valeurs de comptage générées par lesdits deux codeurs à impulsions.
